# EUROPÄISCHE PATENTSCHRIFT

(11) **EP 1 269 142 B1**
(45) Veröffentlichungstag und Bekanntmachung des Hinweises auf die Patenterteilung: **22.08.2007**
(21) Anmeldenummer: 00966040.8
(22) Anmeldetag: 15.09.2000
(51) Int. Cl.: G01N 1/28, G01N 1/04, G02B 21/26

(54) **VERFAHREN ZUR BEARBEITUNG EINER MASSE MITTELS LASERBESTRAHLUNG UND STEUERSYSTEM DAFÜR**
METHOD FOR WORKING A MASS BY MEANS OF LASER RADIATION AND A CONTROL SYSTEM THEREFOR
PROCEDE DE TRAITEMENT D'UN PRODUIT PAR RAYONNEMENT LASER, ET SYSTEME DE COMMANDE Y RELATIF

(30) Priorität: 27.03.2000 DE 10015157
(43) Veröffentlichungstag der Anmeldung: 02.01.2003
(73) Patentinhaber: P.A.L.M. Microlaser Technologies AG, 82347 Bernried (DE)
(72) Erfinder: SCHÜTZE, Karin, 82327 Tutzing (DE); SCHÜTZE, Raimund, 82327 Tutzing (DE)
(74) Vertreter: Banzer, Hans-Jörg
(86) Internationale Anmeldenummer: PCT/EP2000/009077
(87) Internationale Veröffentlichungsnummer: WO 2001/073398

(56) Entgegenhaltungen:
- WO-A-97/13838
- WO-A-97/29355
- US-A- 4 907 158
- GOLDSTEIN S R ET AL: "AN INSTRUMENT FOR PERFORMING LASER CAPTURE MICRODISSECTION OF SINGLE CELLS" REVIEW OF SCIENTIFIC INSTRUMENTS, US, AMERICAN INSTITUTE OF PHYSICS. NEW YORK, Bd. 70, Nr. 11, November 1999 (1999-11), Seiten 4377-4385, XP000885106 ISSN: 0034-6748

## Beschreibung

Die vorliegende Erfindung betrifft ein Verfahren zur Bearbeitung einer biologischen oder nichtbiologischen Masse nach dem Oberbegriff des Anspruches 1 sowie ein Steuersystem für eine Vorrichtung zur Bearbeitung einer biologischen oder nichtbiologischen Masse nach dem Oberbegriff des Anspruches 15. Insbesondere betrifft die vorliegende Erfindung ein Verfahren zur Bearbeitung, Separierung und/oder Gewinnung von mikroskopisch kleinen biologischen und/oder nichtbiologischen Objekten einer biologischen oder nichtbiologischen Masse sowie ein Steuersystem für eine entsprechende Vorrichtung.

Zur Materialinjektion in lebende Zellen ist die Verwendung von sogenannten Mikrokapillaren bekannt, die über einen meist pneumatisch oder hydraulisch bewegten Mikromanipulator gesteuert werden. Die gewünschten Substanzen werden unter großer mechanischer Belastung in die einzelne Zelle injiziert. Die Herstellung der sterilen Mikrokapillaren ist zeitaufwendig und kostenintensiv.

Aus diesem Grund wurde die Verwendung eines fokussierten Laserstrahls vorgeschlagen, um kleine selbstheilende Löcher ohne mechanischen Kontakt in die Zellmembran zu bohren. Die kurze Öffnungszeit reicht aus, um das in der umgebenden Flüssigkeit gelöste Material in die Zelle einzuschleusen. Ein mit dieser Methode verbundenes Problem besteht jedoch darin, dass für eine präzise Laser-Mikroinjektion die Zielobjekte sowohl lateral, d.h. in x- und γ-Richtung, als auch vertikal, d.h. in z-Richtung, mit Nanometer-Genauigkeit angefahren werden müssen. Ein weiteres Problem besteht darin, die erfolgreich injizierten Zellen von den anderen Zellen zu isolieren bzw. für die weiteren Untersuchungen zu präparieren.

Zur Separierung einzelner Zellen aus einer großen Zahl von in einer Flüssigkeit dispergierten biologischen Objekten sind geeignete Trenn- bzw. Sortiervorrichtungen kommerziell erhältlich. Während bei der Fluoreszenz-aktivierten Zellsortierung ("Fluorescence Activated Cell Sorter", FACS) elektrostatische Prinzipien zur räumlichen Separation zum Einsatz kommen, wird bei der magnetisch aktivierten Zellsortierung ("Magnetic Activated Cell Sorter", MACS) mit magnetischen Kräften gearbeitet. Hierbei liegen die Zellen jedoch nicht auf einem planaren Träger nebeneinander. Überdies haben beide Methoden den Nachteil, dass sich manche Objekte nur eingeschränkt (FACS) oder überhaupt nicht getrennt voneinander absondern lassen (MACS).

Die zuvor beschriebenen Methoden können keine einzelnen Zellen aus einem Zellverband, wie etwa einem Gewebe oder einem histologischen Gewebepräparat, lösen. Aus Zellverbänden werden bisher einzelne Zellen mit mechanischen Mikrowerkzeugen, z.B. Mikrokapillaren oder Mikronadeln, mühsam und mit großer Kontaminationsgefahr herausgelöst.

In der WO 97/29355A der Anmelderin wurde daher ein neuartiges Verfahren zum Sortieren und zur Gewinnung von einzelnen biologischen Objekten, die auf einem planaren Träger angeordnet sind, vorgeschlagen. Dabei wird vorgeschlagen, ein selektiertes biologisches Objekt von der umgebenden weiteren biologischen Masse durch einen Laserstrahl abzutrennen, so dass das selektierte biologische Objekt von der weiteren biologischen Masse frei präpariert ist. Das somit frei präparierte biologische Objekt wird anschließend mit Hilfe eines Laserschusses von dem Träger zu einer Auffangvorrichtung katapultiert, wobei es sich bei der Auffangvorrichtung beispielsweise um ein Auffangsubstrat handeln kann. Als Träger der biologischen Masse kann eine Polymerfolie verwendet werden.

Ein zu separierendes biologisches Objekt einer auf dem Träger aufgebrachten biologischen Masse wird somit zunächst selektiert, aus der biologischen Masse ausgeschnitten und anschließend durch einen laserinduzierten Transportprozess zu der Auffangvorrichtung geschleudert. Unter "biologischen Objekten" werden dabei im Rahmen der vorliegenden Anmeldung vor allem lebende oder fixierte biologische Zellen oder Zellbestandteile verstanden, die Bestandteil eines flüssigen oder festen biologischen Materials, wie beispielsweise eines Zellgewebes, eines Abstriches oder einer Zellkultur etc. sind.

Mit Hilfe des zuvor beschriebenen Verfahrens, welches dem Oberbegriff des Anspruches 1 zugrunde liegt, können bestimmte biologische Objekte gezielt mit einer ausgewählten Substanz durch berührungslose Laser-Mikroinjektion beladen und anschließend die erfolgreich injizierten biologischen Objekte aussortiert werden. Die biologischen Objekte können nebeneinander auf einem festen planaren Träger aufgebracht sein, wobei der Vorgang des Absonderns innerhalb kurzer Zeit und berührungslos durchgeführt werden kann. Die Überlebensfähigkeit bzw. die Morphologie der biologischen Objekte wird gewährleistet, d.h. die biologischen Objekte werden durch den Mikroinjektionsvorgang und durch den Abtrennprozess nicht geschädigt bzw. beeinträchtigt.

Das zuvor beschriebene Verfahren kann jedoch manuell nur relativ aufwendig mit der gewollten Präzision durchgeführt werden, da ein abzutrennendes biologisches Objekt nach dem Schneidevorgang präzise gegenüber dem Laser positioniert bzw. ausgerichtet werden muss, um anschließend durch einen weiteren Laserimpuls bzw. Laserschuss zu der Auffangvorrichtung katapultiert werden zu können. D.h. nach dem Schneidevorgang muss der zum Katapultieren am besten geeignete Punkt des gewünschten biologischen Objekts, z.B. der Mittelpunkt, möglichst exakt angefahren werden. Zudem ist bei einer manuellen Durchführung dieses Verfahrens eine mehrmalige Wiederholung ein und desselben Schneidevorgangs/Katapultiervorgangs nicht mit hoher Genauigkeit möglich.

Der vorliegenden Erfindung liegt daher die Aufgabe zugrunde, ein verbessertes Verfahren zur Bearbeitung einer biologischen oder nichtbiologischen Masse sowie ein Steuersystem für eine entsprechende Vorrichtung vorzuschlagen, womit die zuvor beschriebenen Probleme beseitigt und ein möglichst genaues sowie benutzerfreundliches Schneiden und/oder Katapultieren einzelner in der Masse enthaltener biologischer oder auch nichtbiologischer Objekte möglich ist.

Diese Aufgabe wird erfindungsgemäß durch ein Verfahren mit den Merkmalen des Anspruches 1 bzw. ein Steuersystem mit den Merkmalen des Anspruchs 15 gelöst. Die Unteransprüche definieren jeweils bevorzugte und vorteilhafte Ausführungsformen der vorliegenden Erfindung.

Die vorliegende Erfindung wird nachfolgend anhand des Schneidens und/oder Katapultierens biologischer Objekte beschrieben. Die Erfindung ist jedoch ebenso für nichtbiologische Objekte (unbelebte Materie) anwendbar, wobei es sich z.B. um mikroskopisch kleine Objekte aus Glas, Silica, Kunststoff etc. oder künstlich hergestellte Vesikel usw. in der biologischen Masse handeln kann. Ebenso ist die vorliegende Erfindung auf nichtbiologische Massen, z.B. Polymermassen oder dergleichen, anwendbar, aus denen mikroskopisch kleine Objekte herausgelöst werden sollen.

Erfindungsgemäß wird das Schneiden und/oder Katapultieren eines biologischen Objekts durch Bestrahlung mit einem Laserstrahl rechnergestützt durchgeführt, so dass die Laserlichtquelle, welche den zum Schneiden und/oder Katapultieren dienenden Laserstrahl erzeugt, automatisch angesteuert und die zum Schneiden und/oder Katapultieren erforderliche Relativbewegung zwischen dem Laserstrahl und dem das biologische Objekt aufweisenden Träger automatisch herbeigeführt und gesteuert wird.

Hinsichtlich der Bewegung des Trägers bzw. der Auffangvorrichtung werden spezielle Positionen definiert und abgespeichert, die insbesondere auf die Lage des Laserstrahls bezogen sind und einzeln oder nacheinander rechnergestützt, d.h. automatisch, angefahren werden können.

Die vorliegende Erfindung ermöglicht somit eine automatisierte Durchführung eines Schneide- und/oder Katapultiervorgangs, wobei insbesondere mehrere Schneide- und/oder Katapultiervorgänge rechnergestützt, d.h. automatisch, nacheinander durchgeführt werden können. Für jeden einzelnen Schneide-/Katapultiervorgang ist die geforderte Genauigkeit bzw. Präzision gewährleistet.

Um die einzelnen Schneide- und/oder Katapultiervorgänge festlegen bzw. überwachen zu können, wird mit Hilfe einer geeigneten Kamera, insbesondere einer CCD-Kamera, ein Videobild des auf dem Träger befindlichen biologischen Materials erzeugt und auf einem Bildschirm eines Computer- oder Rechnersystems dargestellt. Dieses Videobild wird mit einer Benutzerschnittstelle des Computersystems überlagert, wobei auf dem Bildschirm unter anderem in Echtzeit die jeweilige Laserposition dargestellt wird. Durch eine Vielzahl von rechnergestützten Funktionen wird sichergestellt, dass selbst ein unerfahrener Benutzer die Mikrodisksektion bzw. das Katapultieren einzelner Zellen einfach und mit hoher Genauigkeit durchführen kann.

Diese Funktionen, die auf dem Bildschirm vorzugsweise in Form von sogenannten "Pull-Down-Menüs" oder Menüfenstern, in denen die wichtigsten Funktionen zusammengefasst sind, angeboten werden, ermöglichen beispielsweise, dass der Benutzer in einem entsprechenden Betriebsmodus unmittelbar über entsprechende Eingabemittel, beispielsweise eine Computermaus, einem Joystick, einem Trackball, einem Graphik-Tablett etc., die Relativbewegung zwischen dem Träger und dem Laser steuern kann. Gemäß einem bevorzugten Ausführungsbeispiel der vorliegenden Erfindung ist hierfür für den Träger eine automatisch steuerbare Verstellvorrichtung vorgesehen, so dass der Träger mit dem darauf befindlichen biologischen Material relativ zu dem Laserstrahl verstellt werden kann. Selbstverständlich ist jedoch auch eine Verstellung des Lasers in Bezug auf den Träger oder sowohl eine Verstellung des Trägers als auch des Lasers denkbar und vorzugsweise zusätzlich realisiert.

Als Laser wird vorzugsweise ein gepulster UV-Laser mit einer Wellenlänge von 337 nm eingesetzt. Als Träger wird in der Regel ein Glas-Objektträger verwendet, welcher vorzugsweise mit einer Trägerfolie, bestehend aus einer UVabsorbierenden Polymerfolie mit einer Dicke zwischen 5 µm und 15 µm, deren Absorptionsverhalten an die Wellenlänge des UV-Lasers angepasst ist und somit vorzugsweise in der Umgebung der Laserwellenlänge ein Absorptionsmaximum besitzt, beschichtet sein kann. Ebenso können als Träger Teflonmembranen, z.B. in Form von sogenannten Petrischälchen, oder ca. 20 µm dicke Filtermembranen, wie sie z.B. zum Filtrieren von Blut eingesetzt werden, verwendet werden. Die Dicke der Trägermaterialien kann somit von 0,1 µm (Folie) bis 2 mm (Glas-Objektträger) reichen. Als Auffangvorrichtung kann ein Auffangsubstrat verwendet werden, welches in Form einer Folie oder Platte oder auch in Form eines topfförmigen Behälters ausgebildet sein kann. Insbesondere werden als Auffangvorrichtung Mikrozentrifugenbehälter empfohlen, wie sie in der Molekularbiologie verwendet werden, beispielsweise eine Mikrotiterplatte mit 50 bis 500 Vertiefungen ("Wells"), so dass nacheinander mehrere biologische Objekte von unterschiedlichen Vertiefungen aufgefangen werden können. Die Auffangvorrichtung kann mit einer adhäsiven Schicht versehen sein, so dass die herauskatapultierten biologischen Objekte durch die Klebeschicht fixiert werden können. Vorzugsweise ist auch für die Auffangvorrichtung eine rechnergestützt ansteuerbare Verstellvorrichtung vorgesehen.

Mittels einer weiteren Funktion kann auf dem Bildschirm bzw. dem Videobild der biologischen Masse eine Schnittkurve gezeichnet und anschließend automatisch die Schnittkurve abgefahren werden, um die auf dem Träger befindliche biologische Masse bei gleichzeitiger Aktivierung des Lasers entsprechend der zuvor gezeichneten Kurve zu schneiden. Anschließend kann manuell oder automatisch (z.B. in der Mitte des herausgeschnittenen biologischen Objekts) ein Laserimpuls oder Laserschuss gesetzt werden, um das herausgeschnittene biologische Objekt von dem Träger zu der Auffangvorrichtung zu katapultieren.

Zur automatischen Durchführung eines Katapultiervorgangs oder mehrerer Katapultiervorgänge können auf dem Bildschirm oder dem Videobild entsprechende Punkte in der biologischen Masse definiert werden, die anschließend automatisch angefahren werden, so dass die diesen Punkten entsprechenden biologischen Objekte anschließend durch ebenfalls automatisch aktivierte Laserimpulse von dem Träger zu der Auffangvorrichtung katapultiert werden. Dabei ist zu beachten, dass bei einer entsprechenden Wahl der Bestrahlungsenergie und/oder der Fokussierung des Laserstrahls auch ein direktes Katapultieren eines entsprechenden biologischen Objekts aus der umgebenden biologischen Masse möglich ist, ohne dass dieses biologische Objekt zuvor herausgeschnitten worden ist. Zu diesem Zweck muss gegenüber einem Schneidevorgang die Bestrahlungsenergie erhöht und/oder der Laserstrahl in Bezug auf die Objektebene defokussiert werden. Ein direktes Herauskatapultieren einzelner biologischer Objekte aus der umgebenden biologischen Masse hat zwar zur Folge, dass diese biologischen Objekte nicht so sauber wie bei einem vorhergehenden Schneiden von der umgebenden biologischen Masse abgetrennt werden, der Verfahrensablauf wird jedoch deutlich beschleunigt, da der vorhergehende Schritt des Schneidens mit einer separaten Laserbestrahlung wegfällt. Bei zytozentrifugierten Präparaten liegen die Zellen einzeln vor, so dass ein direktes Katapultieren völlig ohne Verunreinigung durch benachbarte Zellen erfolgen kann.

Allgemein ist zu bemerken, dass die Einstellungen des Lasers (insbesondere die Laserenergie und die Laserfokuseinstellung) von der Art und Beschaffenheit des Präparats (insbesondere dessen Größe und Dicke), von der Präparationsweise sowie von den Mikroskopeinstellungen (Objektiv, interne Nachvergrößerung usw.) etc. abhängig ist. In der Regel wird zum Schneiden weniger Energie als zum Katapultieren eingesetzt, wobei der Laserfokus beim Katapultieren leicht unterhalb des Präparats versetzt wird.

Gemäß einem bevorzugten Ausführungsbeispiel der vorliegenden Erfindung ist auch eine rechnergestützte Kalibrierungsfunktion vorgesehen, mit deren Hilfe die erforderliche Übereinstimmung zwischen dem Videobild, d.h. der Bildschirmdarstellung und der Bewegung des Trägers hergestellt werden kann.

Da das Videobild über ein Objektiv aufgenommen wird und es bei einem Objektivwechsel durch die nicht genau übereinstimmenden optischen Achsen der beiden Objektive zu einer Verschiebung des Zentrums der Bildschirmabbildung kommen kann, wird eine Korrekturfunktion angeboten, mit deren Hilfe rechnergestützt eine Positionsverschiebung der optischen Abbildung infolge eines Objektivwechsels korrigiert werden kann. Zu diesem Zweck wird durch eine spezielle Vorgehensweise rechnergestützt die sich bei einem Objektivwechsel einstellende Positionsverschiebung der optischen Abbildung erfasst und anschließend die gespeicherten Trägerpositionen, d.h. die jeweiligen X- und Y-Koordinaten, entsprechend der erfassten Positionsverschiebung korrigiert, so dass wieder die korrekte Zuordnung der gespeicherten Koordinaten zur Bildschirmdarstellung hergestellt wird und eine gespeicherte Position wieder mit dem ursprünglich beabsichtigten Bildpunkt übereinstimmt.

Die vorliegende Erfindung eignet sich beispielsweise dazu, bestimmte Substanzen in einzelne biologische Objekte, beispielsweise Zellen, zu mikroinjizieren und anschließend diese biologischen Zellen automatisch auszusortieren. Ebenso kann eine rechnergesteuerte Mikroinjektion ohne nachfolgende Aussonderung der entsprechenden Zellen einfach durchgeführt werden. Es sind sogenannte Selektionsmedien bekannt, in denen Zellen kultiviert werden können, wobei eine mit einem bestimmten Gen injizierte Zelle Nahrung von diesem Selektionsmedium aufnehmen und weiter wachsen kann, während nicht injizierte Zellen absterben. Weiterhin können mit Hilfe der vorliegenden Erfindung einzelne biologische Objekte aus einer sehr großen Anzahl von Objekten (z.B. 10⁵-10⁹) rechnergestützt räumlich abgetrennt und ausgesondert werden. Die Abtrennung von gehäuften Zellen als Gesamteinheit ist ebenso möglich. Des weiteren kann die Erfindung auch zur automatischen Separation von spezifischen Zellen aus Gewebeschnitten eingesetzt werden. Lebende Zellen können einfach rechnergesteuert trotz Feuchtigkeit katapultiert und anschließend weiterkultiviert werden. Zellen oder auch nichtbiologische Objekte können in Flüssigkeit von einer Ebene in eine andere Ebene katapultiert werden. Unter "biologischen Objekten" werden im Rahmen der vorliegenden Erfindung vor allem lebende oder fixierte biologische Zellen oder Zellbestandteile verstanden, die Bestandteil eines flüssigen oder festen biologischen Materials, beispielsweise eines Zellgewebes, sein können.

Die Erfindung wird nachfolgend unter Bezugnahme auf die beigefügte Zeichnung anhand bevorzugter Ausführungsbeispiele näher beschrieben.
Figur 1 zeigt den prinzipiellen Aufbau einer Vorrichtung zur Realisierung der vorliegenden Erfindung,
Figur 2 zeigt ein Bedienpaneel eines in Figur 1 gezeigten Lasers,
Figur 3 zeigt ein auf einem in Figur 1 gezeigten Bildschirm dargestelltes Menüfenster, mit dem ein Menüfenster zur automatischen Steuerung eines Trägertisches, ein Menüfenster zur automatischen Steuerung von Schneide- und/oder Katapultiervorgängen und ein Menüfenster zur automatischen Steuerung einer in Figur 1 gezeigten Auffangvorrichtung aufgerufen werden können,
Figur 4 zeigt das Menüfenster zur automatischen Steuerung des Trägertisches,
Figur 5 zeigt das Menüfenster zur automatischen Steuerung von Schneide- und/oder Kalibriervorgängen,
Figur 6 zeigt das Menüfenster zur automatischen Verstellung der Auffangvorrichtung,
Figur 7 zeigt ein Menüfenster zur Einstellung einer Lasermarkierung, die auf dem in Figur 1 gezeigten Bildschirm dargestellt wird,
Figur 8A-Figur 8C zeigen Darstellungen zur Verdeutlichung eines rechnergestützten Schneidevorgangs bei dem in Figur 1 gezeigten System,
Figur 9A und Figur 9B zeigen Darstellungen zur Verdeutlichung eines rechnergestützten Katapultiervorgangs bei dem in Figur 1 gezeigten System für ein zuvor gemäß Figur 8A-8C geschnittenes biologisches Objekt, und
Figur 10A und Figur 10B zeigen Darstellungen zur Verdeutlichung des rechnergestützten direkten Katapultierens mehrerer biologischer Objekte, ohne dass diese zuvor mittels Laserbestrahlung aus der umgebenden biologischen Masse herausgeschnitten worden sind.

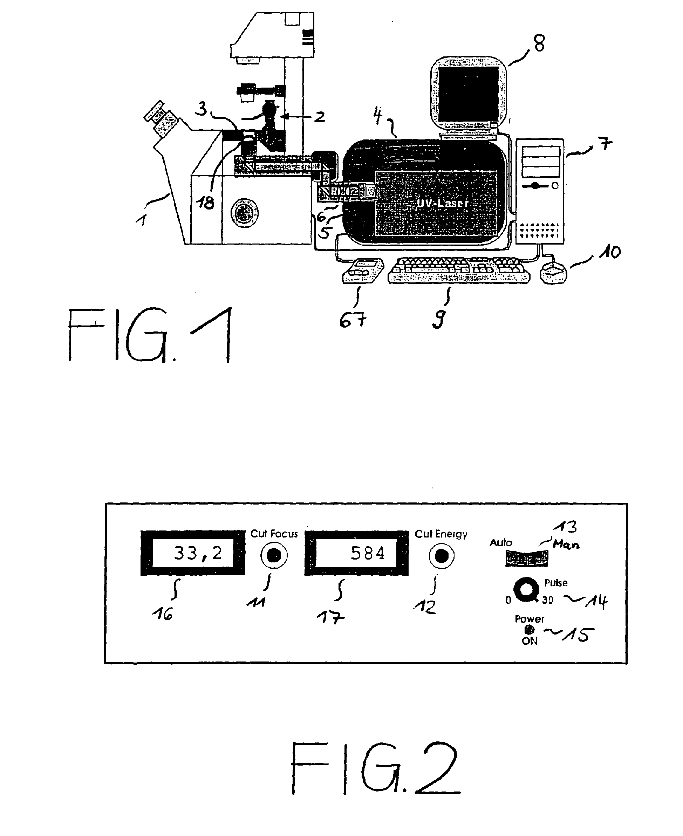

In Figur 1 ist der Aufbau eines Laser-Mikroskop-Systems dargestellt, wie es zur Realisierung der vorliegenden Erfindung eingesetzt werden kann. Das System ist modular aufgebaut und kann somit an unterschiedliche experimentelle Anforderungen individuell angepasst werden.

Wesentlicher Bestandteil des in Figur 1 gezeigten Systems ist eine Laservorrichtung 4, in der eine Laserlichtquelle zur Erzeugung eines Laserstrahls untergebracht ist. Des weiteren ist in der Laservorrichtung 4 die Optik 5, 6 untergebracht, die erforderlich ist, um den Laserstrahl in ein Mikroskop 1 einzukoppeln und den Laserfokus in der Objektebene auf den optischen Fokus des Mikroskops 1 abzustimmen. Im vorliegenden Fall handelt es sich um einen gepulsten UV-Stickstofflaser, dessen Wellenlänge 337 nm und dessen Impulsenergie z.B. 270 µJ beträgt. Die Impulsdauer beträgt 3 ms, während die Impulsfrequenz 1-30 Impulse pro Sekunde beträgt.

Zur Steuerung der Laservorrichtung 4 ist das in Figur 2 gezeigte Steuerpaneel vorgesehen. Der Stickstofflaser emittiert einen Laserstrahl mit einer festen Laserenergie. Für eine präzise Laser-Mikromanipulation ist jedoch eine präzise Verstellung der Laserenergie erforderlich. Aus diesem Grund ist ein Quarzfilter 5 senkrecht zum Laserstrahlpfad angeordnet. Dieser Quarzfilter wird von einem Gleichstrommotor gedreht, der über einen am Steuerpaneel befindlichen Potentiometerknopf 12 gesteuert werden kann, um somit die Laserenergie entsprechend einzustellen. Die augenblicklich eingestellte Laserenergie wird in einer LCD-Anzeige 17 dargestellt. Zudem ist an der Seite der Laservorrichtung 4 ein Verstellknopf zur manuellen Verstellung des Quarzfilters 5 vorgesehen, wobei jedoch für diese manuelle Verstellung keine LCD-Anzeige vorgesehen ist.

Neben der Einstellung der Laserenergie kann auch der Laserfokus unabhängig von dem Mikroskopfokus eingestellt werden, d.h. der Brennpunkt des Lasers kann in z-Richtung relativ zur Objektebene des Mikroskops 1 verschoben werden. Zu diesem Zweck ist ebenfalls ein Schrittmotor vorgesehen, der die in Figur 1 gezeigten Linsen 6 bewegt. Die Fokussierung bzw. der Schrittmotor kann durch einen weiteren, in Figur 2 gezeigten Potentiometerknopf 11 gesteuert werden, wobei die augenblickliche Einstellung des Laserfokus in einer weiteren LCD-Anzeige 16 dargestellt wird. Auch die Linsen 6 können über einen an der Seite der Laservorrichtung 4 vorgesehenen Einstellknopf manuell verstellt werden, wobei für diese manuelle Einstellung analog zum Fall der Einstellung der Laserenergie keine LCD-Anzeige vorhanden ist.

Über einen Schalter 13 des Steuerpaneels kann zwischen einem automatischen Betrieb und einem manuellen Betrieb (getriggert über einen Fußschalter 67) der Laservorrichtung 4 umgeschaltet werden. Des weiteren ist ein Potentiometerknopf 14 zur Einstellung der Impulsrate des Lasers (1-30 Impulse pro Sekunde) vorgesehen. Eine Anzeige 15 informiert darüber, ob die Laservorrichtung 4 augenblicklich eingeschaltet ist.

Der Laserstrahl wird über mehrere beschichtete Strahlteiler in das Mikroskop 1 eingekoppelt und zu einem Objektiv 18 hin abgelenkt. Der Durchmesser des auf der Objektebene auftreffenden Laserstrahls ist maßgeblich von der numerischen Apparatur des Objektivs 18 abhängig. Ein Objektiv mit einer relativ hohen numerischen Apparatur ermöglicht Laserstrahldurchmesser kleiner als 1 µm. Zudem sollte darauf geachtet werden, dass das jeweils verwendete Objektiv 18 eine hohe Durchlässigkeit für die jeweilige Laserwellenlänge aufweist, um Energieverluste zu minimieren.

Der über das Objektiv 18 emittierte Laserstrahl trifft schließlich auf einen motorisierten und computergesteuerten Mikroskop- oder Trägertisch 3, auf dem ein Träger mit einer zu bearbeitenden biologischen Masse angeordnet ist. Oberhalb des Trägertisches 3 befindet sich ein manuell betätigbarer oder vorzugsweise ebenfalls motorisierter und computergesteuerter Manipulator 2. Die Komponenten 2 und 3 ermöglichen eine exakte Objektpositionierung mit Nanometer-Präzision sowie die automatische Durchführung von Mikro-Manipulationsprozeduren.

Der motorisierte Trägertisch 3 ist entlang zweier linearer Achsen (x- und y-Richtung) verfahrbar. Zu diesem Zweck sind zwei Hybrid-Schrittmotoren mit vier Schritten pro 360°/Umdrehung vorgesehen. Die minimale Schrittgröße beträgt 20 nm, so dass der auf der Trägerbühne 3 befindliche Träger mit sehr hoher Genauigkeit positioniert werden kann.

An dem motorisierten Manipulator 2 kann beispielsweise eine Nadel oder Mikropipette zur Mikroinjektion angebracht sein. Im Rahmen der vorliegenden Erfindung wird jedoch davon ausgegangen, dass an dem Manipulator 2 eine Auffangvorrichtung angebracht ist, um von dem Träger wegkatapultierte biologische Objekte aufzufangen. Der motorisierte Manipulator 2 kann sowohl in x- und y-Richtung als auch in z-Richtung verfahren werden. Zu diesem Zweck sind drei Schrittmotoren vorgesehen, welche dieselbe Präzision wie die für den Trägertisch 3 vorgesehenen Schrittmotoren aufweisen.

Vorzugsweise ist sowohl der Trägertisch 3 als auch der Manipulator 2 mit Endschaltern ausgestattet, die gewährleisten, dass der jeweilige Antriebsmotor automatisch gestoppt wird, falls eine Achse bis zu dem entsprechenden Endschalter verfahren wird.

Auch die Einstellung des Laserfokus kann begrenzt werden, um Schäden am Objektiv 18 zu vermeiden.

Bei dem Mikroskop 1 kann es sich um ein beliebig ausgestaltetes Mikroskop handeln. Insbesondere ist sowohl die Verwendung eines inversen als auch eines aufrechten Mikroskops oder eines Lasermikroskops denkbar. Das Mikroskop 1 ist mit einer Videokamera, insbesondere einer CCD-Videokamera ("Charge Coupled Device") ausgestattet, die den Bereich des Trägers 3 oberhalb des Objektivs 18 aufnimmt. Das Videosignal dieser Videokamera wird einem handelsüblichen Computer ("Personal Computer") 7 zugeführt und dort mit einer Framegrapper-Karte verarbeitet, so dass das entsprechende Videobild in Echtzeit auf dem Bildschirm oder dem Monitor 8 des Computers 7 dargestellt werden kann. Ebenso ist ein Speichern einzelner Videobilder auf einem geeigneten Speichermedium des Computers 7 möglich. Des weiteren kann mit dem Computer 7 auch ein analoger oder digitaler Videorekorder zum Aufzeichnen der von der Videokamera gelieferten Videobilder gekoppelt sein. Wie nachfolgend noch näher beschrieben wird, sind auf dem Computer 7 bzw. der darauf ablaufenden Software verschiedene Funktionen implementiert, die sowohl eine rechnergestützte, d.h. automatische, Ansteuerung der Laservorrichtung 4 als auch des Mikroskops 1 ermöglichen, so dass beispielsweise der Laser automatisch aktiviert und der Manipulator 2 bzw. der Trägertisch 3 automatisch verfahren werden können. Zur Einstellung bzw. Auswahl dieser Funktionen sind herkömmliche Eingabemittel, wie beispielsweise eine Tastatur 9 oder eine Computermaus 10, vorgesehen. Des weiteren ist der Laservorrichtung 4 ein Fußschalter 67 zugeordnet, durch dessen Betätigung der Laser manuell aktiviert werden kann.

Nachfolgend sollen die bei dem in Figur 1 gezeigten System zur Steuerung des Mikroskops 1 bzw. des Trägertisches 3 und des Manipulators 2 sowie des Lasers 4 vorgesehenen Funktionen näher erläutert werden.

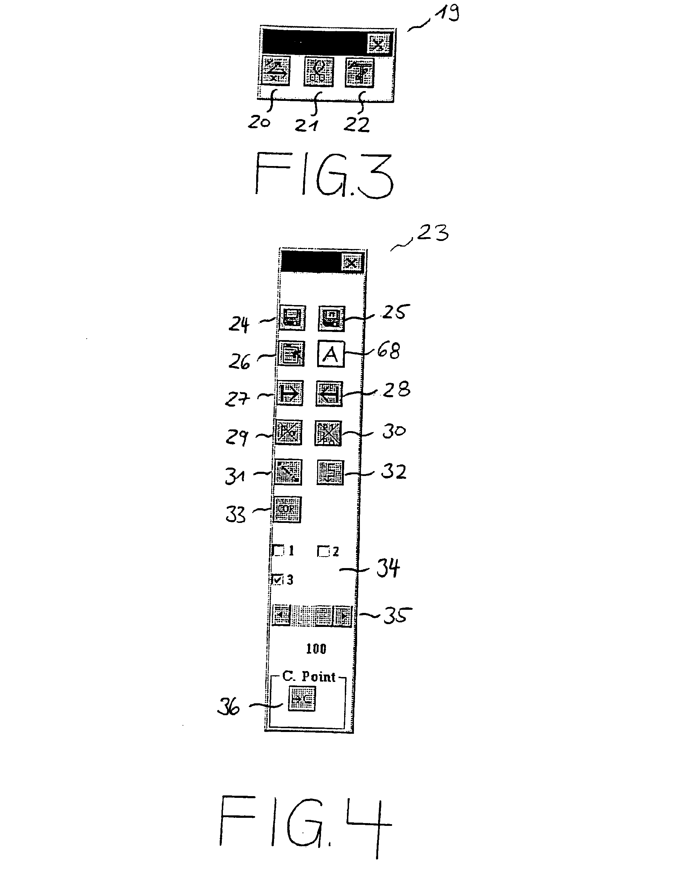

Nach dem Einschalten des Computers 7 wird auf dem Bildschirm 8 das von der Videokamera augenblicklich aufgenommene Mikroskopbild mit einer Markierung für den Laser-Zielpunkt dargestellt. Am unteren Bildschirmrand erscheint ein Statusfenster, während am oberen Bildschirm ein in Figur 3 näher dargestelltes Menüfenster 19 zum Aufrufen weiterer Menüfenster geöffnet wird. Das Steuerprogramm wird im wesentlichen über die in Figur 1 gezeigte Computermaus 10, vorzugsweise eine Drei-Tasten-Maus gesteuert, wobei jedoch auch einige Funktionen durch entsprechende Tastenkombinationen der Tastatur 9 aufgerufen werden können.

Im wesentlichen kann zwischen zwei unterschiedlichen Betriebsmodi unterschieden werden. Im sogenannten Cursor-Modus können mit Hilfe der Maus Menüs geöffnet, entsprechende Menüfunktionen ausgewählt und sogenannte Buttons angeklickt werden. Im Verfahr-Modus werden hingegen Bewegungen der Maus 10 direkt in entsprechende Verstellsignale und somit entsprechende mechanische Bewegungen des Trägertisches 3 oder des Manipulators 2 umgesetzt. Im Cursor-Modus können der Manipulator 2 oder der Trägertisch 3 nicht durch Hin- und Herbewegen der Maus 10 bewegt werden. Durch Betätigen beispielsweise der mittleren Maustaste kann zwischen dem Cursor- und dem Verfahr-Modus hin- und hergeschaltet werden. Der Verfahr-Modus besitzt verschiedene Varianten, zwischen denen durch Betätigen beispielsweise der rechten Maustaste hin- und hergeschaltet werden kann. So kann in einer ersten Variante des Verfahr-Modus durch Bewegen der Maus 10 der Trägertisch 3 in xy-Richtung verschoben werden. D.h. durch Verschieben der Maus 10 nach oben wird entsprechend der Trägertisch 3 in dieselbe Richtung verschoben, was auf dem Bildschirm 8 anhand des jeweils in Echtzeit aktualisierten Videobilds nachvollzogen werden kann. Diese Zuordnung kann jedoch auch umgekehrt werden, um beispielsweise beim Betrachten der Probe eine Übereinstimmung zwischen der Verschiebung des sichtbaren Videobilds und der Mausbewegung herbeizuführen. In einer zweiten Variante des Verfahr-Modus wird der Manipulator 2 entsprechend der Mausbewegung in xy-Richtung verschoben, wobei hinsichtlich der Ansteuerung des Manipulators 2 die vorhergehenden Bemerkungen analog Gültigkeit besitzen. In einer dritten Variante des Verfahr-Modus kann der Manipulator 2 entsprechend der Mausbewegung in z-Richtung verschoben werden, so dass der Abstand zwischen dem Trägertisch 3 und dem Manipulator 2 entsprechend verändert wird. Vorzugsweise ist immer ein XY-Verfahr-Modus, d.h. entweder der Trägertisch-XY-Modus oder der Manipulator-XY-Modus, vorgewählt. Solange der Verfahr-Modus im Hintergrund zwar gewählt, jedoch noch nicht aktiviert ist, befindet sich die Steuerung im Cursor-Modus.

Das Statusfenster ist immer am unteren Bildschirmrand sichtbar und kann (im Cursor-Modus) angeklickt und mit der Maus 10 verschoben werden. Im Statusfenster wird unter anderem angezeigt, ob sich die Steuerung augenblicklich im Cursor-Modus oder im Verfahr-Modus befindet. Befindet sich die Steuerung im Verfahr-Modus, wird zudem die augenblicklich aktivierte Variante des Verfahr-Modus (Trägertisch-XY-Modus, Manipulator-XY-Modus oder Manipulator-Z-Modus) angezeigt. Des weiteren wird im Statusfenster die Anzahl der für den Trägertisch 3 augenblicklich gespeicherten Positionswerte sowie der augenblicklich ausgewählte Trägertisch-Positionswert angezeigt. Des weiteren wird im Statusfenster angezeigt, welcher von drei möglichen Geschwindigkeitsbereichen für die Verstellung des Trägertisches 3 augenblicklich ausgewählt ist. Eine weitere Anzeige des Statusfensters gibt den in der Steuerung augenblicklich ablaufenden aktiven Steuerbefehl wieder. Zudem werden im Statusfenster die X- und Y-Koordinaten angezeigt, welche die absolute Position (in µm) des Mikroskop- bzw. Trägertisches, bezogen auf die beim Programmstart vorgefundene Null-Position, definieren. Schließlich ist in dem Statusfenster auch der Radius (in µm) eines mit einer nachfolgend noch näher beschriebenen Funktion gezeichneten Kreises zum automatischen Ausschneiden eines auf dem Träger befindlichen biologischen Objekts dargestellt.

Nachfolgend sollen die im Cursor-Modus zur Verfügung stehenden Steuerfunktionen näher erläutert werden.

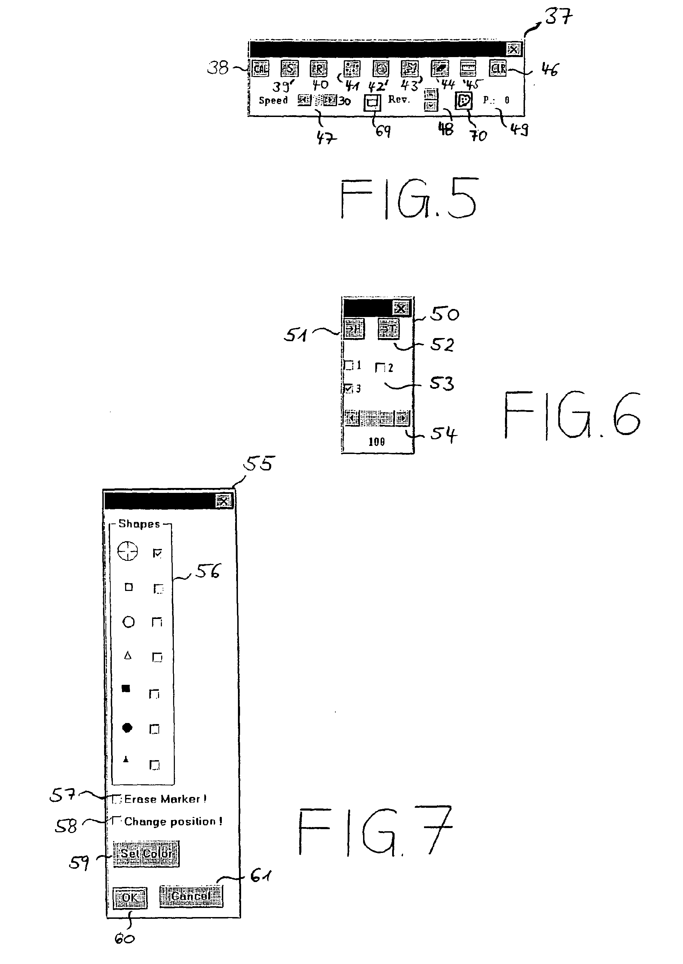

Wie bereits zuvor erwähnt worden ist, wird in der Regel nach dem Einschalten des Computers 7 auf dem Bildschirm 8 das in Figur 3 gezeigte Menüfenster 19 dargestellt, welches drei sogenannte Buttons 20-22 aufweist. Durch Anklicken dieser Buttons 20-22 mit der Maus kann jeweils ein weiteres, dem angeklickten Button zugewiesenes Menüfenster aufgerufen und auf dem Bildschirm 8 geöffnet werden. Durch Anklicken des Buttons 20 kann ein in Figur 4 gezeigtes Menüfenster geöffnet werden, welches die wesentlichen zur Steuerung des Trägertisches 3 vorgesehenen Steuerfunktionen beinhaltet. Durch Anklicken des Buttons 21 kann ein in Figur 5 näher dargestelltes Menüfenster geöffnet werden, welches automatische Schneide- und/oder Katapultierfunktionen beinhaltet. Durch Anklicken des Buttons 22 kann schließlich ein in Figur 6 dargestelltes Menüfenster geöffnet werden, welches Steuerfunktionen für den in Figur 1 gezeigten Manipulator 2 aufweist. Der Button 22 ist nur vorgesehen, wenn ein motorisierter, computergesteuerter Manipulator 2 verwendet wird.

Nachfolgend sollen die einzelnen Funktionen des in Figur 4 gezeigten Menüfensters 23 näher erläutert werden.

Wie bereits zuvor erwähnt worden ist, kann der Trägertisch im Verfahr-Modus durch eine einfache Mausbewegung beliebig verfahren bzw. verstellt werden. Befindet sich der Trägertisch 3 in einer gewünschten Position, kann wieder in den Cursor-Modus gewechselt und mit der Maus der in Figur 4 gezeigte Button 24 angeklickt werden, so dass die aktuelle Position des Trägertisches 3 gespeichert wird. Gleichzeitig wird der bereits zuvor erwähnte Positionszähler im Statusfenster um 1 erhöht. Diese Schritte können beliebig wiederholt werden, wenn weitere neue Positionswerte abgespeichert werden sollen. Um einzelne Positionswerte leichter wiederauffinden zu können, kann beim Speichern jeder einzelne Positionswert mit einem positionsspezifischen Kommentar versehen werden. Zu diesem Zweck ist der Button 25 vorgesehen, bei dessen Anklicken mit der Maus 10 ein Kommentar-Fenster geöffnet wird, in welches ein der jeweiligen Position entsprechender Kommentar eingegeben und abgespeichert werden kann. Durch Anklicken des Buttons 26 wird ein Auswahlfenster für die gespeicherten Positionswerte geöffnet, so dass der Benutzer mit der Maus einen gewünschten Punkt bzw. eine gewünschte Position auswählen kann, die anschließend durch Erzeugung entsprechender Verstellsignale für die den Trägertisch 3 verstellenden Motoren angefahren wird. Gleichzeitig wird im Statusfenster der angefahrene Positionswert mit seiner fortlaufenden Nummer und dem gespeicherten Kommentar angezeigt.

Beim Anklicken des Buttons 68 wird ein Fenster geöffnet, welches ein Abspeichern der zuvor mit Hilfe der Buttons 24 oder 25 gespeicherten Positionen gemäß der Auswahlliste des Buttons 26 in Form eines Punkt- oder Positionsarrays in Relation zu einem von dem Benutzer definierten Referenzpunkt auf dem Objektträger erlaubt. Dadurch können für jeden Objektträger bestimmte Positionen oder Punkte abgespeichert werden, die sich nach erneutem Einlegen des Objektträgers und nach Aufsuchen des Referenzpunktes wiederfinden lassen. Auf diese Weise können ausgewählte Bereiche zu einem späteren Zeitpunkt bearbeitet, d.h. dissektiert oder katapultiert, werden.

Durch die in Figur 4 gezeigten Buttons 27 und 28 des Menüfensters 23 können die gespeicherten Positionswerte nacheinander aufgerufen und angefahren werden. Mit jedem Anklicken des Buttons 27 wird der jeweils nächste Positionswert aus der Liste angefahren, während durch Anklicken des Buttons 28 der jeweils vorhergehende Positionswert in der Liste angefahren wird. Mit Hilfe der beiden Buttons 29 und 30 können gespeicherte Positionswerte gelöscht werden, wobei durch Anklicken des Buttons 29 lediglich der augenblickliche Positionswert in der Liste gelöscht wird, während durch Anklicken des Buttons 30 sämtliche in der Liste enthaltenen Positionswerte gelöscht werden.

Durch Anklicken des Buttons 31 kann ein Fenster aufgerufen werden, in dem für das Anfahren gespeicherter Positionswerte eine Geschwindigkeit festgelegt wird. Auch der in Figur 4 gezeigte Bereich 34 dient zur Einstellung der Geschwindigkeit, wobei durch Auswählen einer der drei dargestellten Geschwindigkeitsstufen für den Verfahr-Modus die Geschwindigkeit für die Umsetzung der Mausbewegung in eine entsprechende Trägertischbewegung ausgewählt werden kann. Der darunter befindliche Einstellbereich 35 erlaubt diesbezüglich eine Geschwindigkeit-Feineinstellung für die Umsetzung der Mausbewegung im Verfahr-Modus.

Durch Anklicken des Buttons 32 kann ein vorgegebener Bereich des auf dem Träger befindlichen biologischen Materials mäanderförmig abgefahren werden. Nach Anklicken des Buttons 32 wird hierzu ein Fenster geöffnet, in dem die Breite des abzufahrenden Bereichs in x-Richtung und die Tiefe des abzufahrenden Bereichs in y-Richtung eingegeben werden kann (in µm). Des weiteren kann die Anzahl der Hin- und Herbewegungen, mit denen der ausgewählte Bereich abgefahren werden soll, sowie die Geschwindigkeit für das Abfahren eingestellt werden. Nach Eingabe dieser Werte kann durch Anklicken einer START-Taste dieses Fensters das automatische Abfahren vom aktuellen Punkt ausgehend gestartet werden. Das automatische Abfahren kann jederzeit durch Betätigen einer beliebigen Taste unterbrochen werden. Durch Anklicken eines in dem Fenster dargestellten CONTINUE-Buttons kann das automatische Abfahren von der zuletzt erreichten Position aus fortgeführt werden. Durch Anklicken eines QUIT-Buttons kann das automatische Abfahren beendet und das entsprechende Fenster geschlossen werden. Wie nachfolgend noch näher erläutert wird, ist es auch möglich, nach vorhergehender Auswahl eines gewünschten Bereichs mit Hilfe eines Zeichentools des Menüfensters 37 durch Anklicken des Buttons 32 diesen Bereich automatisch mäanderförmig zu durchfahren.

Der in Figur 4 gezeigte Button 33 dient zur Korrektur einer infolge eines Objektivwechsels eintretenden Positionsverschiebung der optischen Abbildung. Bei einem Objektivwechsel kommt es aufgrund der nicht genau übereinstimmenden optischen Achsen der beiden Objektive zu einer Verschiebung des Zentrums der Bildschirmabbildung. Die Position des Trägertisches 3 bleibt erhalten, es verschiebt sich lediglich der Mittelpunkt der Bildschirmabbildung. Um diese Verschiebung der Bildschirmabbildung zu korrigieren, empfiehlt es sich, den Trägertisch 3 vor einem Objektivwechsel in eine vordefinierte Position zu fahren. Dies kann beispielsweise dadurch erreicht werden, dass die auf dem Bildschirm 8 dargestellte Laser-Markierung mit einem markanten Punkt des auf dem Träger befindlichen biologischen Materials zur Deckung gebracht wird. Anschließend kann das Objektiv gewechselt werden. Befindet sich danach die Laser-Markierung nicht über dem zuvor gewählten markanten Punkt des biologischen Materials, ist infolge des Objektivwechsels eine Positionsverschiebung der optischen Abbildung eingetreten. Wird nunmehr der Trägertisch 3 erneut in die zuvor gewählte vordefinierte Position gefahren, so dass sich die Laser-Markierung über dem gewählten markanten Punkt befindet, ist diese Verschiebung ein Maß für die infolge des Objektivwechsels eingetretene Positionsverschiebung der optischen Abbildung. Durch anschließendes Anklicken des Buttons 33 wird diese nach dem Objektivwechsel durchgeführte Verschiebung des Trägertisches 3 erfasst und alle zuvor gespeicherten Positionswerte bzw. die jeweils entsprechenden X- und Y-Koordinaten um die erfasste XY-Verschiebung korrigiert. Anschließend entsprechen alle gespeicherten Positionswerte bzw. Positionskoordinaten des Trägertisches 3 wieder den gleichen charakteristischen Punkten.

Nach einem nachfolgend noch näher beschriebenen Katapultieren eines biologischen Objekts aus dem auf dem Träger befindlichen Material zu der an dem Manipulator 2 befindlichen Aufhangvorrichtung ("Cap"), ist es sinnvoll, durch Fokussieren auf das "Cap" zu begutachten, ob das herauskatapultierte biologische Objekt tatsächlich in dem "Cap" gefangen wurde. Um die Auffangvorrichtung bzw. das "Cap" mit dem Mikroskop betrachten zu können, muss der Trägertisch 3 so verschoben werden, dass sich einerseits das Mikroskop-Objektiv frei bewegen kann und andererseits das biologische Material nicht beschädigt wird. Durch Anklicken des Buttons 36 wird der Trägertisch 3 automatisch auf einen vorher definierten, als "Checkpoint" bezeichneten Punkt gefahren, der derart festgelegt worden ist, dass die zuvor beschriebenen Kriterien erfüllt sind und das "Cap" mit dem Mikroskop betrachtet werden kann.

Im folgenden wird das in Figur 5 gezeigte Menüfenster 37, welches Steuerfunktionen zur automatischen Steuerung von Schneid- und/oder Katapultiervorgängen mittels Laserbestrahlung enthält, erläutert. Dieses Menüfenster 37 enthält unter anderem Funktionen zum Zeichnen von Kurvenverläufen sowie zum Messen von Distanzen im Bildschirmfenster. Ein mit Hilfe dieses Menüfensters 37 definierter Kurvenverlauf kann automatisch, d.h. rechnergestützt, in eine äquivalente Bewegung des Trägertisches 3 umgesetzt werden, so dass es möglich ist, den Trägertisch 3 derart relativ zu dem Laser zu verfahren, dass die tatsächliche Schnittlinie dem zuvor definierten Kurvenverlauf folgt. Die Geschwindigkeit und Anzahl der Wiederholungen des Schneidevorgangs lassen sich einstellen. Dasselbe gilt auch für das rechnergestützt durchgeführte Katapultieren, wobei auf analoge Art und Weise am Bildschirm zu katapultierende biologische Objekte ausgewählt und markiert werden können, die anschließend automatisch durch entsprechendes Verschieben des Trägertisches 3 über den Laser gefahren und mit Hilfe eines automatisch oder manuell ausgelösten Laserschusses herauskatapultiert werden können.

Nach jedem Objektiv- oder Kamerawechsel sollte die Bewegung des Trägertisches 3 vor Verwendung der in dem Menüfenster 37 angebotenen Steuerfunktionen kalibriert werden. Durch dieses Kalibrieren wird die Bildschirm- und Trägertischebene zur Deckung gebracht, d.h. es wird eine Übereinstimmung des auf dem Bildschirm dargestellten Videobilds mit der realen Trägertischposition hergestellt. Die Kalibrierung kann durch Anklicken des in Figur 5 gezeigten Buttons 38 gestartet werden. Anschließend wird auf dem Bildschirm 8 ein Kreuz dargestellt. Der Benutzer muss nunmehr in den Verfahr-Modus wechseln und durch entsprechende Mausbewegung den Trägertisch 3 so verschieben, dass ein markanter Punkt des biologischen Materials unter dem dargestellten Kreuz zu liegen kommt. Anschließend muss der Benutzer wieder in den Cursor-Modus zurückkehren und beispielsweise durch Drücken der linken Maustaste das Anfahren des markanten Punktes bestätigen. Dieser Vorgang wird insgesamt viermal wiederholt, so dass insgesamt vier auf dem Bildschirm 8 dargestellte Kreuze mit dem jeweils gewählten markanten Bildpunkt zur Deckung gebracht werden. Bei jedem Wechsel des Objektivs am Mikroskop oder der Videokamera bzw. beim Umschalten auf eine andere Videokamera muss eine erneute Kalibrierung durchgeführt werden, wobei die Zeilen der jeweils aktiven Videokamera derart ausgerichtet sein müssen, dass sie mit den Bildschirmzeilen übereinstimmen. Ergänzend wird darauf hingewiesen, dass die zuvor beschriebene Kalibrierung im Prinzip auch dann durchgeführt werden kann, wenn lediglich zwei auf dem Bildschirm 8 dargestellten Kreuze mit einem markanten Bildpunkt zur Deckung gebracht werden. Durch das viermalige Anfahren dieses markanten Bildpunkts kann jedoch die Genauigkeit der Kalibrierung erhöht werden.

Mit dem Anklicken des Buttons 38 wird ein Fenster geöffnet, mit dessen Hilfe die auf zuvor beschriebene Weise gewonnenen Kalibrierungsinformationen für die jeweils verwendete Mikroskopkonfiguration (z.B. für das jeweils verwendete Objektiv) gespeichert werden können und somit auch nach Aus- und Wiedereinschalten des Systems erhalten bleiben. Wird eine Mikroskopkonfiguration bzw. ein Objektiv verwendet, für welche bzw. für welches bereits zuvor eine Kalibrierung durchgeführt worden ist, kann mit Hilfe dieses Fensters die bereits zuvor abgespeicherte entsprechende Kalibrierungsinformation abgerufen und zur entsprechenden Einstellung des Systems verwendet werden.

Bei jedem Objektivwechsel wird auch eine Neueinstellung der Laserfokuslage bzw. der Laserenergie notwendig, welche sich zum Teil deutlich von einer vorhergehenden Einstellung unterscheiden kann. In dem nach Anklicken des Buttons 38 geöffneten Kalibrierungsfenster können daher auch die in Abhängigkeit vom jeweiligen Bearbeitungsvorgang und/oder von der jeweils verwendeten Mikroskopeinstellung (Objektiv, Zwischenvergrößerung) zuvor ermittelte ideale Laserfokuslage und/oder Laserenergieeinstellung, welche ein optimales Schneiden bzw. Katapultieren ermöglichen, abgespeichert und beispielsweise mit Hilfe eines weiteren Buttons später wieder abgerufen werden.

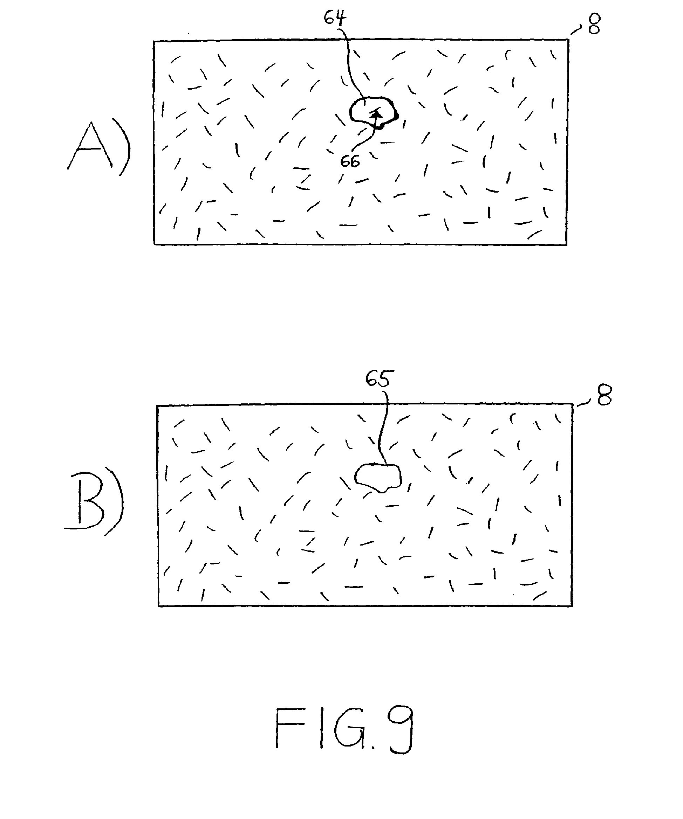

Wie bereits erwähnt worden ist, kann mit Hilfe des in Figur 5 gezeigten Menüfensters 37 ein beliebiger Kurvenverlauf definiert werden, der anschließend als Grundlage für einen automatisch gesteuerten Schnittvorgang mit Hilfe der Laserbestrahlung dient. Durch Anklicken des Buttons 42 kann auf dem Bildschirm 8 eine kreisförmige Schnittlinie gezeichnet werden. Zu diesem Zweck muss nach Anklicken des Buttons 42 der auf dem Bildschirm 8 dargestellte Cursor mit Hilfe der Maus 10 auf den gewünschten Kreismittelpunkt gefahren und anschließend nach Drücken einer Maustaste der Cursor auf den gewünschten Kreisdurchmesser aufgezogen werden. Durch Betätigen der rechten Maustaste kann die Farbe der kreisförmigen Schnittlinie gewählt oder auch der gezeichnete Kreis gelöscht werden. Ebenso ist es möglich, die von einem gezeichneten Kreis umschlossene Fläche berechen zu lassen, was ebenfalls über das nach Betätigen der rechten Maustaste angebotene Menü möglich ist. Nach erfolgter Berechnung wird der ermittelte Flächeninhalt in einem separaten Fenster angezeigt. Ebenso kann durch Anklicken des Buttons 69 eine rechteckförmige Schnittlinie gezeichnet werden, wobei das Rechteck sich an den vier Eckpunkten sowie an den Mittelpunkten der vier Seiten auf die gewünschte Form aufziehen und über die vier Eckpunkte auch drehen lässt (Winkelverschiebung). Auf analoge Art und Weise kann durch Anklicken des Buttons 43 eine Freihandkurve auf dem Bildschirm 8 gezeichnet werden, die anschließend als Schnittkurve für ein automatisch durchgeführtes Schneiden des auf dem Träger befindlichen biologischen Materials verwendet wird. Dies soll nachfolgend näher anhand der Darstellungen in Figur 8A-8C erläutert werden.

Figur 8A zeigt die Bildschirmdarstellung bzw. das Videobild vor dem Zeichnen einer Schnittlinie. Im vorliegenden Fall handelt es sich beim dargestellten biologischen Material um eine Bakterienpopulation, die planar auf dem Träger aufgebracht ist. Durch Anklicken des Buttons 43 kann der Benutzer mit Hilfe einer entsprechenden Mausbewegung den Cursor auf dem Bildschirm 8 bewegen, so dass eine der Cursorbewegung folgende Freihandkurve 62 gezeichnet wird, die in Figur 8B strichpunktiert dargestellt ist. Auch hinsichtlich einer bereits gezeichneten Freihandlinie kann diese durch Betätigen der rechten Maustaste wieder gelöscht oder die Farbe der auf dem Bildschirm 8 dargestellten Freihandkurve eingestellt werden. Zudem kann analog zu dem Fall einer kreisförmigen Kurve die von der Freihandkurve umschlossene Fläche berechnet und angezeigt werden. Durch Anklicken des in Figur 5 gezeigten Buttons 44 kann eine Radiergummifunktion aktiviert werden, mit dessen Hilfe Teile der gezeichneten Freihandkurve 62 gelöscht werden können. Zu diesem Zweck ist insbesondere der Anfangspunkt für das Radieren und der Endpunkt für das Radieren anzuklicken, woraufhin der zu radierende Kurventeil markiert und nach Bestätigung durch den Benutzer gelöscht wird.

Anschließend kann durch Betätigen des Buttons 39 ein automatischer Schneidevorgang entlang der auf dem Bildschirm 8 gezeichneten Kurve 62 durchgeführt werden, d.h. der Computer 7 erzeugt automatisch Verstellsignale für den Trägertisch 3, so dass dieser entsprechend der gezeichneten Freihandkurve 62 über den Laserstrahl bewegt wird. In dem biologischen Material wird somit durch die Laserbestrahlung eine Schnittlinie 63 ausgebildet, die auch auf der Bildschirmdarstellung sichtbar ist und ein zuvor durch die gezeichnete Freihandkurve 62 ausgewähltes biologisches Objekt 64 umgibt und dieses von dem umgebenden biologischen Material trennt. Die Geschwindigkeit, mit der dieser Laserschnitt durchgeführt wird, kann in einem Auswahlbereich 47 des Menüfensters 37 eingestellt werden. Durch Betätigen bzw. Anklicken des Buttons 40 kann der zuletzt durchgeführte Schneidevorgang wiederholt werden, d.h. der Trägertisch 3 wird automatisch nochmals entlang desselben Kurvenlaufs verfahren. Des weiteren kann über den Einstellbereich 48 die Anzahl der Wiederholungen beim automatisch Schneiden festgelegt werden, so dass ein und derselbe Schneidevorgang automatisch mehrmals nacheinander durchgeführt wird.

Es ist zu beachten, dass vor dem automatischen Schneidevorgang die Laserleistung und/oder der Fokus des Laserstrahls in Abhängigkeit von der zu bearbeitenden Probe eingestellt werden muss. Dies kann, wie bereits zuvor erläutert worden ist, über das in Figur 2 gezeigte Steuerpaneel erfolgen.

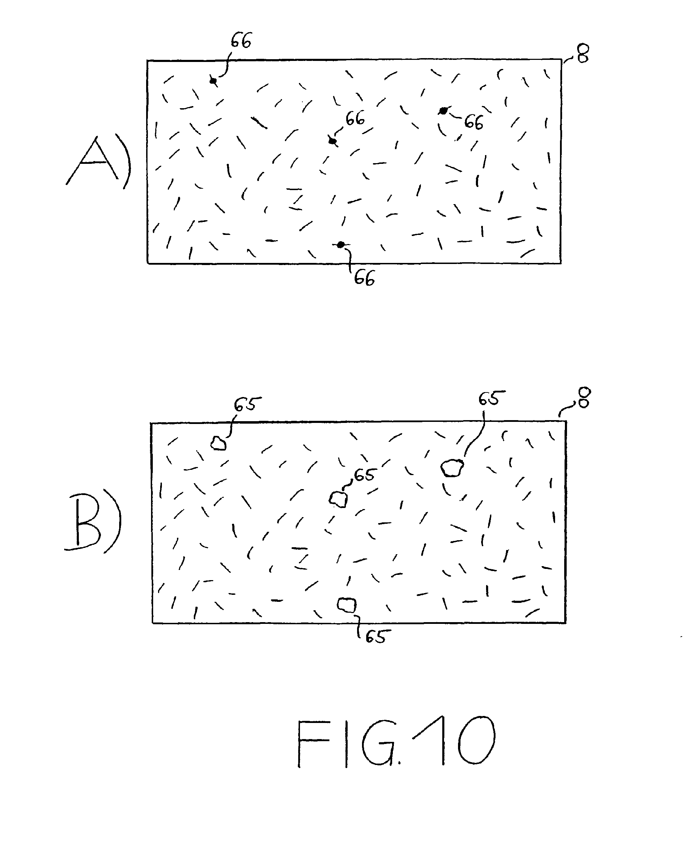

Das gemäß Figur 8C ausgeschnittene biologische Objekt 64 kann nunmehr mit Hilfe einer weiteren Laserbestrahlung aus der biologischen Masse zu der an dem Manipulator 2 befindlichen Auffangvorrichtung katapultiert werden. Zu diesem Zweck sollte die in Figur 9A durch ein schwarzes Dreieck dargestellte und auf dem Bildschirm 8 sichtbare Lasermarkierung 66 zu dem physikalischen Mittelpunkt des zu katapultierenden biologischen Objekts 64 bewegt werden. Anschließend sollte die Laserenergie gegenüber der zum Schneiden verwendeten Laserenergie erhöht und/oder der Laserstrahl gegenüber dem zum Schneiden verwendeten Laserstrahl defokussiert werden, um den angestrebten Photoneneffekt zu erhalten, der zum Herausschleudern des gewünschten biologischen Objekts 64 führt. Untersuchungen haben ergeben, dass zum Katapultieren die Laserenergie in der Regel um 10-25%, vorzugsweise um 10-15%, erhöht werden sollte. Auch der Laserfokus sollte zum Katapultieren entsprechend prozentual verschoben werden, wobei insbesondere eine Verschiebung des Brennpunktes um 1-2 µm gegenüber der Objektebene durchgeführt werden sollte. Ein einzelner Laserimpuls oder Laserschuss, der durch einen kurzen Druck auf den in Figur 1 gezeigten Fußschalter 67 ausgelöst werden kann, führt anschließend zum Herauskatapultieren des gewünschten biologischen Objekts 64. Statt einer derartigen manuellen Aktivierung des Laserimpulses ist auch eine von dem Computer 7 bzw. der darauf implementierten Steuerung durchgeführte automatische Aktivierung des Laserimpulses denkbar, wobei insbesondere auch die Laserenergie und/oder der Laserfokus automatisch entsprechend eingestellt werden kann.

Wie in Figur 9B gezeigt ist, bleibt nach dem Herauskatapultieren des gewünschten biologischen Objekts 64 eine entsprechende Lücke 65 in dem auf dem Träger befindlichen biologischen Material zurück. Da das entsprechende biologische Objekt 64 zuvor aus der umgebenden biologischen Masse herausgeschnitten worden ist, weist das biologische Objekt 64 bzw. die Lücke 65 eine sehr saubere Schnittlinie auf.

Nur der Vollständigkeit halber sei an dieser Stelle darauf hingewiesen, dass selbstverständlich auch bereits separierte biologische Objekte 64 von dem Träger zu der an dem Manipulator 2 befindlichen Auffangvorrichtung (beispielsweise in Form eines Mikrozentrifugenbehälters) katapultiert werden können. Für die Mikrodisksektion einzelner Zellen oder einzelner biologischer Objekte ist in der Regel eine geringere Schneide- und Katapultierenergie erforderlich.

Das Katapultieren ausgewählter biologischer Objekte 64 kann bei dem in Figur 9A gezeigten System auch automatisch durchgeführt werden. Durch Anklicken des in Figur 5 gezeigten Buttons 41 kann eine beliebige Anzahl von biologischen Objekten markiert werden, die anschließend automatisch katapultiert werden sollen. Zu diesem Zweck muss mit Hilfe der Computermaus 10 ein nach dem Anklicken des Buttons 41 auf dem Bildschirm 8 sichtbarer Marker auf das jeweils gewünschte biologische Objekt bewegt und die Auswahl dieses biologischen Objekts beispielsweise durch Betätigen der linken Maustaste bestätigt werden. Das auf diese Weise für den nachfolgenden automatischen Katapultiervorgang ausgewählte biologische Objekt erscheint anschließend entsprechend markiert in dem auf dem Bildschirm 8 dargestellten Videobild. Dieser Vorgang kann mehrmals wiederholt werden, so dass auf dem Bildschirm 8 eine entsprechende Anzahl von ausgewählten biologischen Objekten 66 markiert werden, wie es in Figur 10A gezeigt ist. Im Statusfenster wird die Anzahl der markierten biologischen Objekte 66 angezeigt.

Für das Katapultieren der ausgewählten biologischen Objekte 66 ist es nicht unbedingt erforderlich, dass diese zuvor aus der umgebenden biologischen Masse herausgeschnitten worden sind. Vielmehr haben Untersuchungen ergeben, dass es grundsätzlich auch möglich ist, durch eine entsprechende Laserbestrahlung einzelne biologische Objekte direkt aus der umgebenden biologischen Masse herauszukatapultieren. Zum direkten Katapultieren einzelner biologischer Objekte muss die Laserenergie gegenüber einer zum Schneiden des entsprechenden biologischen Materials geeigneten Laserenergie um ca. 10-25%, vorzugsweise um 15-25%, erhöht werden. Ebenso sollte die Fokussierung des Laserstrahls gegenüber einem zum Schneiden geeigneten Laserstrahl entsprechend prozentual verschoben werden, wobei insbesondere gute Ergebnisse erzielt werden können, wenn der Brennpunkt des Lasers um ca. 1-2 µm gegenüber der Objektebene (insbesondere nach unten) verschoben wird. Durch die Erhöhung der Laserenergie und/oder durch die Defokussierung des Laserstrahls kann der gewünschte Photoneneffekt erzielt werden, der das direkte Katapultieren von in einer biologischen Masse befindlichen biologischen Objekten ermöglicht.

Zum Katapultieren muss - wie zuvor beschrieben worden ist - die Laserenergie und/oder die Fokussierung des Laserstrahls entsprechend eingestellt werden. Dies kann sowohl manuell über das in Figur 2 gezeigte Steuerpaneel als auch automatisch erfolgen. Durch Anklicken des in Figur 5 gezeigten Buttons 39 werden dann die zuvor auf dem Bildschirm markierten biologischen Objekte 66 nacheinander herauskatapultiert, wobei zu diesem Zweck jedes einzelne markierte biologische Objekt 66 durch automatische Erzeugung entsprechender Verstellsignale für den Trägertisch 3 über den Laser gefahren und anschließend bei maximal eingestellter Pulsrate der Laser für einen bis zwei Laserimpulse aktiviert wird. Nachdem auf diese Weise eines der markierten biologischen Objekte 66 herauskatapultiert worden ist, wird automatisch das nächste markierte biologische Objekt 66 angefahren und der Katapultiervorgang wiederholt. In Figur 10B ist die Darstellung des Bildschirms 8 nach Herauskatapultieren sämtlicher zuvor markierter biologischer Objekte 66 dargestellt. Es ist ersichtlich, dass in dem biologischen Material entsprechende Lücken 65 zurückbleiben. Diese Lücken 65 weisen eine unebene oder aufgerauhte Schnittlinie auf, was darauf zurückgeht, dass die entsprechenden biologischen Objekte 66 nicht zuvor aus der umgebenden biologischen Masse herausgeschnitten, sondern direkt aus dieser herauskatapultiert worden sind.

Durch Anklicken des in Figur 5 gezeigten Buttons 40 kann analog zum automatischen Schneidevorgang der zuvor durchgeführte Katapultiervorgang wiederholt werden, so dass für alle zuvor markierten biologischen Objekte 66 (vergleiche Figur 10A) ein erneuter Katapultiervorgang ausgelöst wird. Dies ist insbesondere dann sinnvoll, wenn einzelne der zuvor markierten biologischen Objekte 66 beim ersten Versuch nicht vollständig aus der umgebenden biologischen Masse herauskatapultiert werden konnten.

Anstelle der zuvor beschriebenen Vorgehensweise, bei der der Laserfokus/die Laserenergie vor dem Schneiden bzw. Katapultieren über das Steuerpaneel auf geeignete Werte eingestellt werden, kann das System vorteilhafterweise auch Buttons 39 automatisch die zuvor über das Kalibrierungsfenster (Button 38) gespeicherten idealen Laserfokus- und Laserenergieeinstellungen in Abhängigkeit von der jeweils verwendeten Mikroskopkonfiguration ausgelesen und übernommen werden. Hierzu kann eine automatische Erkennung der jeweils verwendeten Mikroskopkonfiguration bzw. des jeweils verwendeten Objektivs vorgesehen sein.

Wie bereits zuvor erläutert worden ist, sollte zum Katapultieren der Laserstrahl stets auf einen Punkt des gewünschten biologischen Objekts bewegt werden, welcher ideal zum Katapultieren geeignet ist. Dabei kann es sich beispielsweise um den physikalischen Mittelpunkt des jeweils gewünschten biologischen Objekts handeln. Abhängig von der Größe und Art des Präparats ist es jedoch zum Teil auch notwendig, seitlich, d.h. asymmetrisch, zu katapultieren. Dies ist beispielsweise bei lebenden Zellen, Chromosomen oder Einzelzellen sinnvoll, um eine Beschädigung dieser Objekte beim Katapultieren zu vermeiden. Statt dessen ist es auch möglich, beim Ausschneiden des entsprechenden biologischen Objekts eine ca. 1-2 µm dünne Verbindung zwischen dem gewünschten biologischen Objekt und der umgebenden biologischen Masse zu lassen und anschließend zum Katapultieren den Laser exakt über diese dünne Verbindung zu fahren, wobei der anschließende Katapultiervorgang insbesondere auch ohne Defokussierung des Laserstrahls durchgeführt werden kann. Diese Vorgehensweise besitzt den Vorteil, dass vor dem Katapultiervorgang ein ungewolltes Herausfallen oder Verschieben des zuvor ausgeschnittenen biologischen Objekts vermieden werden kann.

Die Buttons 42, 43 und 69 dienen nicht nur zur Definition einer geeigneten Schnittlinie, sondern können auch zur Auswahl eines gewünschten Areals verwendet werden, wobei anschließend durch Anklicken des Buttons 32 des in Figur 4 gezeigten Menüfensters 23 das somit ausgewählte Areal automatisch durch mäanderförmiges Abrastern durchfahren wird. Dies geschieht Vorzugsweise bei einer größeren Vergrößerung, so dass auch sehr kleine Punkte des beobachteten Präparats tatsächlich aufgefunden werden können. Sobald ein interessanter Punkt auftaucht, kann das mäanderförmige Abfahren gestoppt und die entsprechende Position mit Hilfe der in Figur 4 gezeigten Buttons 24 oder 25 abgespeichert werden. Anschließend kann das mäanderförmige Abfahren wieder fortgesetzt werden. Die Geschwindigkeit sowie die Schrittweite des mäanderförmigen Abfahrens kann jeweils individuell eingestellt werden.

Mit Hilfe der Funktion des Buttons 41 kann auch eine Mikroinjektion für gewünschte Zellen durchgeführt werden. Wie zuvor beschrieben worden ist, werden hierzu die zu injizierenden Zellen aus einem Verbund ausgewählt und rechnergestützt sehr präzise am Injektionsort (beispielsweise am Zellkernbereich) markiert. Durch anschließende Betätigung des Buttons 41 werden nunmehr die gewünschten Zellen automatisch angefahren und mit Hilfe des Lasers automatisch gezielt ein einziges Loch in die jeweils angefahrene Zelle geschossen, um beispielsweise ein bestimmtes Gen zu injizieren. Dieses Verfahren kann auch lediglich zur Markierung von Zellen oder von unbelebter Materie (sogenannte Mikrogravur) verwendet werden.

Zur Abtrennung, d.h. Selektion, der mikroinjizierten bzw. mikrogravierten Zellen mit dem Laser, müssen die entsprechenden Zellen auf einer Trägerfolie der zuvor beschriebenen Art gezüchtet werden. Mit Hilfe der Buttons 42, 43 oder 69 kann anschließend eine Schnittlinie um die gewünschten Zellen gezeichnet und mit Hilfe des Lasers entlang der vorgezeichneten Schnittlinie geschnitten werden, so dass eine Membran- oder Folieninsel mit den darauf liegenden Objekten entsteht. Dieser Membran- oder Folienteil dient als Transportmedium für die darauf liegenden Objekte, so dass bei Setzen eines weiteren Laserschusses der Membran- bzw. Folienteil zusammen mit den darauf liegenden Objekten herausgeschossen und anschließend weiterkultiviert werden kann. Auf ähnliche Art und Weise können auch lebende Zellen aus frischen Abstrich- oder Quetschpräparaten gewonnen werden.

Da der mit Hilfe des Mikroskops 1 betrachtete Bereich des Objektträgers auf Grund der installierten Videokamera kontinuierlich auf den Monitor oder Bildschirm 8 des Computers 7 dargestellt wird, ist eine interaktive Kontrolle oder Steuerung des Schneide- und/oder Katapultiervorgangs durch den jeweiligen Benutzer möglich. Jeder Schnitt- oder Katapultiervorgang hinterlässt auf dem Bildschirm 8 in Abhängigkeit von der verwendeten Bildverarbeitungssoftware eine helle Linie, die als Diskriminierungsparameter für ein sauberes bzw. vollständiges Ausschneiden oder Katapultieren verwendet werden kann. Erkennt der Benutzer durch Betrachten des Bildschirms 8, dass die Schnitt- oder Katapultierlinie nicht "sauber" ist, kann er eine Wiederholung des Schnitt- oder Katapultiervorgangs veranlassen und dazu möglicherweise die Laserenergie und/oder die Laserfokuslage neu einstellen bzw. korrigieren.

In Figur 5 ist ein weiterer Button 70 dargestellt, mit dessen Hilfe größere Areale der zu bearbeitenden biologischen Masse direkt vom Glas-Objektträger abgetragen werden können. Zu diesem Zweck wird zunächst mit Hilfe der zuvor beschriebenen Buttons 42, 43 oder 69 ein zu bearbeitender Bereich der biologischen Masse markiert oder ausgewählt. Bei Anklicken des Buttons 70 wird ähnlich zu dem zuvor beschriebenen mäanderförmigen Abrastern durch eine entsprechende Ansteuerung des Trägertisches 3 die gesamte Fläche des markierten Bereichs abgefahren und der Laser derart angesteuert, dass mittels einer schnellen Laserschussserie einzelne Objekte aus dem markierten Bereich herauskatapultiert und somit der gesamte markierte Bereich ablatiert wird. Objekte, die nicht über eine Trägerfolie oder eine Trägermembran miteinander verbunden sind, werden auf diese Weise nicht als Ganzes herausgeschossen, sondern werden einzeln in die Auffangvorrichtung 2 katapultiert, so dass sie für eine nachfolgende genetische oder proteomische Analyse zur Verfügung stehen. Die Rasterpunkte für die einzelnen Laserschüsse können vom Benutzer bestimmt werden, wobei insbesondere der Abstand der Rasterpunkte in Mikrometern auswählbar ist. Auf diese Weise lassen sich in Abhängigkeit von der eingestellten Laserenergie ganze Areale der biologischen Masse ablatieren, um größere Areale ohne Verwendung einer zusätzlichen Trägerfolie oder Trägermembran zur Gewinnung einzelner Objekte in die Auffangvorrichtung 2 zu katapultieren oder auch unerwünschtes Material vom Objektträger zu entfernen.

Eine besondere Funktion stellt der in Figur 5 gezeigte Button 45 dar. Durch Anklicken dieses Buttons kann eine Distanzmessung eingeschaltet werden. Wird anschließend beispielsweise durch Betätigen der linken Maustaste ein Anfangspunkt auf dem dargestellten Videobild angewählt und der Cursor bei weiterhin gedrückter linker Maustaste zu einem gewünschten Endpunkt bewegt, wird nach Loslassen der entsprechenden Maustaste automatisch die Distanz zwischen dem gewählten Anfangspunkt und dem gewählten Endpunkt ermittelt und auf dem Bildschirm 8 dargestellt. Durch erneutes Anklicken des Buttons 45 kann die Distanzmessungsfunktion wieder ausgeschaltet werden.

Der ebenfalls in Figur 5 gezeigte Button 46 hat das Löschen sämtlicher Markierungen auf dem Bildschirm 8 zur Folge. D.h. nach Anklicken des Buttons 46 werden alle auf dem Bildschirm 8 gezeichneten Schnittkurven und alle zum Katapultieren markierten Punkte gelöscht.

Des weiteren ist in Figur 5 ein Anzeigenbereich 49 dargestellt, wobei in diesem Anzeigenbereich 49 stets die laufende Nummer des aktuell angefahrenen Punktes bei einer zum Katapultieren zuvor markierten Punkteschar dargestellt wird.

Nachfolgend sollen kurz die Steuerfunktionen des zur Steuerung des Manipulators 2 vorgesehenen Menüfensters erläutert werden, welches durch Anklicken des in Figur 3 gezeigten Buttons 22 aufgerufen bzw. geöffnet werden kann. Das entsprechende Menüfenster 50 ist in Figur 6 dargestellt.

Durch Anklicken des in Figur 6 gezeigten Buttons 51 kann der Manipulator 2 in eine zuvor definierte und abgespeicherte Home-Position gefahren werden. Diese Home-Position entspricht einer Position des Manipulators 2, bei der sich der Manipulator 2 außerhalb des Sichtfeldes befindet und bestückt werden kann. Entsprechend kann durch Anklicken des Buttons 52 der Manipulator 2 in die sogenannte Target-Position gefahren werden, welche der eigentlichen Arbeitsposition des Manipulators 2 entspricht und insbesondere zum Aufsammeln von herauskatapultierten biologischen Objekten verwendet wird. In dieser Target-Position befindet sich der Manipulator 2 bzw. die daran befestigte Auffangvorrichtung im Sichtfeld über dem Träger des biologischen Materials. Über dem unter den Buttons 51 und 52 befindlichen Einstellbereich 53 kann analog zu dem in Figur 4 gezeigten Menüfenster 23 die Geschwindigkeit der automatischen Manipulatorbewegung in drei Geschwindigkeitsstufen grob eingestellt werden. Mit Hilfe des darunter befindlichen Schiebers 54 kann zusätzliche eine Feineinstellung der Anfahrgeschwindigkeit von 1-100% vorgenommen werden.

Der Zahlenwert unterhalb des Schiebers 54 zeigt den jeweils aktuell eingestellten Prozentsatz an.

Die in den Figuren 4-6 gezeigten und zuvor erläuterten Menüfenster 23, 37 bzw. 50 fassen die wichtigsten Steuerfunktionen des in Figur 1 gezeigten Systems zusammen und dienen dazu, dass auch ein unerfahrener Anwender möglichst rasch auf diese Steuerfunktionen zugreifen kann. Neben diesen Menüfenstern wird am oberen Bildschirmrand ständig eine Menüleiste angeboten, welche mehrere nebeneinander angeordnete Menüpunkte aufweist, bei deren Anklicken Untermenüs (sogenannte "Pull-Down-Menüs") geöffnet werden, um weitere Einstellungen vorzunehmen. Alle Steuerfunktionen der in Figur 4-6 gezeigten Menüfenster sind auch in diesen "Pull-Down-Menüs" enthalten.

So enthält diese Menüleiste beispielsweise einen Menüpunkt "File", bei dessen Anklicken Informationen über die aktuelle Programmversion aufgerufen, das aktuelle Video- bzw. Kamerabild auf einem ausgewählten Speichermedium gespeichert oder das Steuerprogramm beendet werden kann. Des weiteren weist die Menüleiste einen Menüpunkt "Optik" auf, der Funktionen zur Konfiguration der Bildschirmwiedergabe des Kamerabilds enthält. Unter diesem Menüpunkt kann beispielsweise die Wiedergabe der drei Grundfarben Rot, Grün und Blau sowie der Kontrast und die Helligkeit der Bildschirmdarstellung verändert werden, wobei die unter diesem Menüpunkt vorgenommenen Einstellungen auch Einfluss auf die als Datei gespeicherte Kamerabilder haben.

Ein weiterer Menüpunkt "Stage" der am oberen Bildschirmrand dargestellten Menüleiste umfasst einige Funktionen der in Figur 4 und Figur 5 gezeigten Menüfenster. Zudem kann unter diesem Menüpunkt die automatische Bewegung des Trägertisches 3 derart konfiguriert werden, dass die Bewegung auf eine wählbare Koordinatenachse beschränkt bleibt oder eine horizontale Mausbewegung in eine seitenverkehrte horizontale Bewegung des Trägertisches 3 umgesetzt wird. Für das automatische Schneiden können die entsprechenden Steuerparameter (Radius der Kreisbewegung in µm, Anzahl der Wiederholungen, Schnittgeschwindigkeit etc.) eingestellt werden. Darüber hinaus kann unter diesem Menüpunkt auch das Rechteck konfiguriert werden, welches für ein mäanderförmiges Abfahren der auf dem Träger befindlichen biologischen Masse verwendet wird (vergleiche den in Figur 4 gezeigten Button 32). Zusätzlich kann unter diesem Menüpunkt eine bestimmte Verfahrposition des Trägertisches 3 als Referenzposition für alle gespeicherten Positionswerte definiert werden. Sollte zu einem späteren Zeitpunkt dieselbe biologische Probe wiederverwendet werden, lässt sich somit der Bezug zu früher gespeicherten Koordinaten wiederherstellen. Damit die Referenzposition auf der biologischen Probe wiedergefunden werden kann, sollte sie dauerhaft gekennzeichnet sein (beispielsweise durch eine entsprechende Lasermarkierung).

Ein weiterer Menüpunkt "Manipulator" der am oberen Bildschirmrand dargestellten Menüleiste betrifft die Steuerung des Manipulators 2 und umfasst sämtliche der in Figur 6 gezeigten Steuerfunktionen. Zudem kann unter diesem Menüpunkt die aktuelle Manipulatorfunktion als Target-Position oder Home-Position gespeichert werden (vergleiche die in Figur 6 gezeigten Buttons 51 und 52, mit denen diese Positionen automatisch wiederangefahren werden können). Des weiteren kann unter diesem Menüpunkt festgelegt werden, in welcher Reihenfolge die drei Koordinatenachsen bei der Bewegung des Manipulators 2 von und zur Home-Position abgefahren werden sollen. Durch eine geeignete Wahl dieser Einstellung kann der Manipulator 2 veranlasst werden, Hindernisse zu umfahren, so dass verhindert werden kann, dass der Manipulator 2 die daran befestigte Auffangvorrichtung oder die auf dem Träger befindliche biologische Probe durch eine Bewegung des Manipulators beschädigt wird. Um eine Beschädigung der Probe zu verhindern, sollte die z-Richtung beim Herausfahren des Manipulators 2 als erste und beim Hereinfahren des Manipulators 2 als letzte gefahren werden. Zudem kann unter diesem Menüpunkt auch die Zuordnung zwischen der Mausbewegung und der Manipulatorbewegung hinsichtlich der X-, Y- und Z-Koordinate umgekehrt werden.

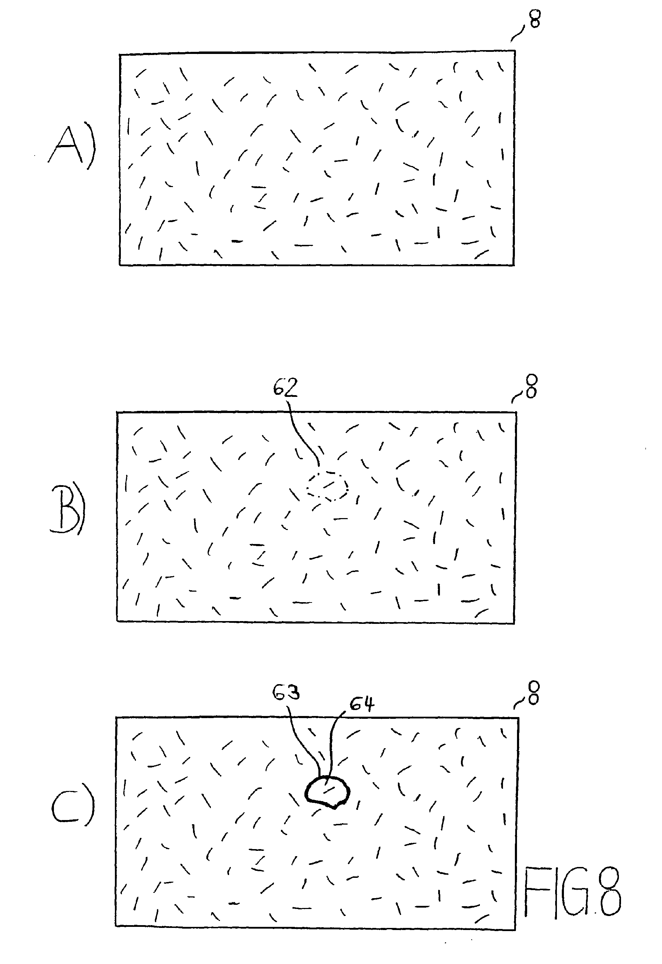

Die Menüleiste weist des weiteren einen "Lasermarker"-Menüpunkt auf, über den die Bildschirmdarstellung des Lasermarkers konfiguriert werden kann. Der Lasermarker zeigt denjenigen Ort an, an dem der Laserstrahl bei Auslösung auf die auf dem Träger befindliche Probe trifft. Durch Anklicken dieses Menüpunkts kann beispielsweise das in Figur 7 gezeigte Konfigurationsfenster 55 geöffnet werden. Mit Hilfe des Auswahlbereichs 56 kann das zur Darstellung des Laserauftreffpunktes gewählte Symbol, mit dem der Laser auf dem Bildschirm 8 dargestellt wird, ausgewählt werden. Beim dargestellten Beispiel ist als Lasermarkierung ein Fadenkreuz ausgewählt. Ist das Kästchen 57 aktiviert, wird die Darstellung des Lasermarkers auf dem Bildschirm 8 nach Anklicken des Buttons 60 gelöscht. Durch Aktivierung des Kästchens 58 kann nach anschließendem Anklicken des Buttons 60 der Lasermarker mit der Maus verschoben werden. Es erscheint dann ein durch Bewegung der Maus verschiebbares Positionierungskreuz, wobei beispielsweise durch Drücken der linken Maustaste die aktuelle Position dieses Positionierungskreuzes als neue Lasermarkerposition übernommen werden kann. Durch Anklicken des Buttons 59 kann ein Fenster zur Auswahl der Darstellungsfarbe des Lasermarkers geöffnet werden. Durch Anklicken des Buttons 61 können schließlich alle vorgenommenen Änderungen verworfen und die im Speicher befindliche Position des Lasermarkers geladen werden. Anschließend wird das Fenster 55 geschlossen.

Die Menüleiste weist schließlich auch einen Menüpunkt "Cut" auf, in dem sämtliche Steuerfunktionen des in Figur 5 gezeigten Menüfensters 37 zusammengefasst sind, die insbesondere zum automatischen Schneiden und/oder Katapultieren dienen. Darüber hinaus sind hier auch Steuerfunktionen denkbar, mit denen rechnergestützt verschiedene Laserenergie/Laserfokuseinstellungen vorgenommen oder von dem in Figur 2 gezeigten Steuerpaneel übernommen und abgespeichert werden können, um diese gespeicherten Werte anschließend abzurufen und automatisch einzustellen. Für diese Funktionen können beispielsweise auch in dem in Figur 5 gezeigten Menüfenster 37 entsprechende Buttons/Schieberegler etc. vorgesehen werden.

## Patentansprüche

1. Verfahren zur Bearbeitung einer Masse,
wobei sich die Masse auf einem von einem Träger (3) gehaltenen Objekt träger, befindet, und
wobei durch Bestrahlung mit einem Laserstrahl die Masse geschnitten und/oder die Masse oder ein Objekt der Masse von dem Träger (3) zu einer Auffangvorrichtung (2) katapultiert wird,
wobei das Schneiden und/oder das Katapultieren der Masse bzw. des Objekts der Masse mittels der Bestrahlung durch den Laserstrahl rechnergestützt erfolgt,
**dadurch gekennzeichnet,**
**dass** Positionen des Trägers (3) rechnergestützt in Bezug auf einen bestimmten Referenzpunkt des Objektträgers gespeichert werden, um bei einer späteren Verwendung desselben Objektträgers durch Auswählen einer gespeicherten Position und Erzeugung entsprechender Verstellsignale für eine Träger-Verstellvorrichtung eine bestimmte Stelle des Objektträgers anzufahren.

2. Verfahren nach Anspruch 1,
**dadurch gekennzeichnet,**
**dass** kontinuierlich ein Videobild der auf dem Träger (3) befindlichen Masse aufgenommen und dargestellt wird, und dass anhand des dargestellten Videobilds das Schneiden und/oder das Katapultieren rechnergestützt gesteuert wird.

3. Verfahren nach Anspruch 2,
**dadurch gekennzeichnet,**
**dass** das dargestellte Videobild rechnergestützt mit einer Schnittkurve (62) überlagert und anschließend automatisch der Schnittkurve (62) entsprechende Verstellsignale für eine entsprechende Relativbewegung zwischen dem Träger (3) und dem Laserstrahl erzeugt werden, um bei gleichzeitiger Aktivierung des Laserstrahls einen der Schnittkurve (62) entsprechenden Schnitt (63) der Masse zu erzielen.

4. Verfahren nach Anspruch 2 oder 3,
**dadurch gekennzeichnet,**
**dass** auf dem dargestellten Videobild rechnergestützt mindestens ein einem zu katapultierenden Objekt (64) entsprechender Punkt (66) definiert und anschließend automatisch ein Verstellsignal zur entsprechenden Ausrichtung des Trägers (3) und des Laserstrahls erzeugt wird, um bei anschließender Aktivierung des Laserstrahls das gewünschte Objekt (64) von dem Träger (3) zu der Auffangvorrichtung (2) zu katapultieren.

5. Verfahren nach einem der vorhergehenden Ansprüche,
**dadurch gekennzeichnet,**
**dass** eine Träger-Verstellvorrichtung zur Verstellung des Trägers (3) vorgesehen ist, und
**dass** die Träger-Verstellvorrichtung in Bezug auf ein dargestelltes Videobild der auf dem Träger (3) befindlichen Masse kalibriert wird.

6. Verfahren nach Anspruch 5,
**dadurch gekennzeichnet,**
**dass** zur Kalibrierung auf dem Videobild mehrmals ein Punkt vorgegeben wird, der durch rechnergestütztes Verstellen der Träger-Verstellvorrichtung mit einem bestimmten Punkt der auf dem Träger (3) befindlichen Masse zur Deckung gebracht wird.

7. Verfahren nach einem der vorhergehenden Ansprüche,
**dadurch gekennzeichnet,**
**dass** eine Auffangvorrichtung-Verstellvorrichtung zur Verstellung der Auffangvorrichtung (2) vorgesehen ist, wobei rechnergestützt Verstellsignale für die Auffangvorrichtung-Verstellvorrichtung erzeugt werden, um die Auffangvorrichtung (2) automatisch zu verstellen, und
**dass** eine Träger-Verstellvorrichtung zur Verstellung des Trägers (3) vorgesehen ist, wobei rechnergestützt Verstellsignale für die Träger-Verstellvorrichtung erzeugt werden, um den Träger (3) automatisch zu verstellen.

8. Verfahren nach einem der vorhergehenden Ansprüche,
**dadurch gekennzeichnet,**
**dass** ein Videobild der auf dem Träger (3) befindlichen Masse aufgenommen und dargestellt wird, und
**dass** eine Verschiebung des Zentrums der Darstellung des Videobildes erfasst und gespeicherte Positionen des Trägers (3) anschließend entsprechend korrigiert werden.

9. Verfahren nach Anspruch 8,
**dadurch gekennzeichnet,**
**dass** das Videobild über ein Objektiv (18) aufgenommen wird,
**dass** vor einem Wechsel des Objektivs (18) der Träger (3) derart bewegt wird, dass der Laserstrahl auf dem Videobild in Bezug auf die auf dem Träger (3) befindliche Masse eine bestimmte Position annimmt,
**dass** nach dem Wechsel des Objektivs (18) der Träger (3) derart bewegt wird, dass der Laserstrahl auf dem Videobild erneut dieselbe bestimmte Position in Bezug auf die auf dem Träger (3) befindliche Masse annimmt, wobei automatisch der hierfür benötigte Verstellweg des Trägers (3) erfasst wird, und
**dass** die gespeicherten Positionen des Trägers (3) automatisch entsprechend dem zuvor erfassten Verstellweg korrigiert werden.

10. Verfahren nach einem der vorhergehenden Ansprüche,
**dadurch gekennzeichnet,**
**dass** ein Videobild der auf dem Träger (3) befindlichen Masse aufgenommen und dargestellt wird,
**dass** das Videobild über ein Objektiv (18) aufgenommen wird,
**dass** für verschiedene Objektive (18) zum Schneiden und/oder Katapultieren geeignete Einstellungen für die Energie und die Fokussierung des Laserstrahls ermittelt und gespeichert werden, und
**dass** bei einem Wechsel des Objektivs (18) die entsprechenden gespeicherten Werte für die Energie und/oder die Fokussierung des Laserstrahls ausgelesen und zur Steuerung des Laserstrahls verwendet werden.

11. Verfahren nach Anspruch 10,
**dadurch gekennzeichnet,**
**dass** bei einem Wechsel des Objektivs (18) die dem neuen Objektiv (18) entsprechenden gespeicherten Werte für die Energie und/oder die Fokussierung des Laserstrahls automatisch ausgelesen und der Laserstrahl entsprechend automatisch angesteuert wird.

12. Verfahren nach Anspruch 5 und einem der vorhergehenden Ansprüche,
**dadurch gekennzeichnet,**
**dass** das Videobild über ein Objektiv (18) aufgenommen wird, und
**dass** für verschiedene Objektive die Kalibrierung der Träger-Verstellvorrichtung durchgeführt wird, wobei in Folge jeder Kalibrierung entsprechende Kalibrierungsinformationen gewonnen und abgespeichert werden, um bei einer späteren Verwendung desselben Objektivs die entsprechenden gespeicherten Kalibrierungsinformationen wieder auszulesen und zur entsprechenden automatischen Kalibrierung der Träger-Verstellvorrichtung zu verwenden.

13. Verfahren nach einem der vorhergehenden Ansprüche,
**dadurch gekennzeichnet,**
**dass** ein Schneide- und/oder Katapultiervorgang rechnergestützt durchgeführt wird, und
**dass** durch Auswertung einer in Folge des Schneide- und/oder Katapultiervorgangs in einem von der auf dem Träger (3) befindlichen Masse aufgenommenen Videobild dargestellten Schneide- bzw. Katapultierlinie festgestellt wird, ob ein sauberer Schneide- und/oder Katapultiervorgang durchgeführt worden ist, wobei für den Fall, dass kein sauberer Schneide- und/oder Katapultiervorgang durchgeführt worden ist, der Schneide- und/oder Katapultiervorgang wiederholt wird.

14. Verfahren nach einem der vorhergehenden Ansprüche,
**dadurch gekennzeichnet,**
**dass** ein Videobild der auf dem Träger (3) befindlichen Masse aufgenommen und dargestellt wird, und
**dass** das dargestellte Videobild rechnergestützt mit einer einem bestimmten Bereich der Masse definierenden Kurve (62) überlagert und anschließend automatisch der Kurve (62) entsprechende Verstellsignale für eine entsprechende Relativbewegung zwischen dem Träger (3) und dem Laserstrahl erzeugt werden, um den bestimmten Bereich der Masse bei entsprechender automatischer wiederholter Aktivierung des Laserstrahls rasterartig abzufahren und somit die in dem bestimmten Bereich der Masse enthaltenen Objekte (64) von dem Träger (3) zu der Auffangvorrichtung (2) zu katapultieren und somit den bestimmten Bereich abzutragen.

15. Steuersystem für eine Vorrichtung zur Bearbeitung einer Masse,
wobei die Vorrichtung einen Träger (3) zum Halten eines Objektträgers, auf dem sich eine Masse befindet, aufweist,
wobei die Vorrichtung eine Laserlichtquelle (4) zur Erzeugung eine Laserstrahls aufweist, um durch Bestrahlung mit dem Laserstrahl die Masse zu schneiden und/oder die Masse oder ein Objekt der Masse von dem Träger (3) zu einer Auffangvorrichtung (2) zu katapultieren,
wobei das Steuersystem (7) Steuermittel zur automatischen Ansteuerung der Laserlichtquelle (4) und zur automatischen Ansteuerung von Verstellmitteln zur Herbeiführung einer Relativbewegung zwischen dem Laserstrahl und dem Träger (3) aufweist,
**dadurch gekennzeichnet,**
**dass** die Steuermittel Speichermittel zum Speichern von vordefinierten Positionen des Trägers (3) in Bezug auf einen bestimmten Referenzpunkt des Objektträgers umfassen, wobei die Steuermittel derart ausgestaltet sind, dass sie bei Auswahl einer gespeicherten Position entsprechende Verstellsignale für eine Verstellvorrichtung zum Verstellen des Trägers (3) erzeugen, um den Träger (3) automatisch in die entsprechende, auf den Referenzpunkt bezogene Position zu bewegen.

16. Steuersystem nach Anspruch 15,
**dadurch gekennzeichnet,**
**dass** das Steuersystem Eingabemittel (9, 10) zum Steuern der Verstellmittel der Vorrichtung aufweist, wobei die Steuermittel derart ausgestaltet sind, dass sie eine über die Eingabemittel (9, 10) erfasste Bewegung eines Benutzers in ein entsprechendes Verstellsignal für die Verstellmittel umsetzt.

17. Steuersystem nach Anspruch 15 oder 16,
**dadurch gekennzeichnet,**
**dass** eine Anzeigeneinheit (8) zur Darstellung eines von Bildaufnahmemitteln (1) aufgenommenen Videobilds der auf dem Träger (3) befindlichen Masse vorgesehen ist,
**dass** die Steuermittel eine Zeichenfunktion (42, 43, 69) zum Zeichnen einer Schnittkurve aufweisen, wobei die Steuermittel das Videobild auf der Anzeigeneinheit (8) mit der gezeichneten Schnittkurve überlagert darstellen, und
**dass** die Steuermittel derart ausgestaltet sind, dass sie die Verstellmittel entsprechend der gezeichneten Schnittkurve ansteuern und gleichzeitig die Laserlichtquelle (4) aktivieren, um durch die von den Verstellmitteln daraufhin herbeigeführte Relativbewegung zwischen dem Träger (3) und dem Laserstrahl einen der Schnittkurve entsprechenden Schnitt der auf dem Träger (3) befindlichen Masse zu erzielen.

18. Steuersystem nach einem der Ansprüche 15-17,
**dadurch gekennzeichnet,**
**dass** die Steuermittel eine Kalibrierungsfunktion (38) zum Kalibrieren der Verstellmittel in Bezug auf ein auf einer Anzeigeneinheit (8) dargestelltes Videobild der auf dem Träger (3) befindlichen Masse umfassen.

19. Steuersystem nach einem der Ansprüche 15-18,
**dadurch gekennzeichnet,**
**dass** die Steuermittel eine Markierungsfunktion (41) zum rechnergestützten Markieren mindestens eines einem zu katapultierenden Objekt entsprechenden Punktes auf einem auf einer Anzeigeneinheit (8) dargestellten Videobild der auf dem Träger (3) befindlichen Masse umfassen, und
**dass** die Steuermittel derart ausgestaltet sind, dass sie die mit Hilfe der Markierungsfunktion (41) auf dem Videobild markierten Punkte in entsprechende Verstellsignale für die Verstellmittel umsetzen, um jeweils eine entsprechende Ausrichtung der auf dem Träger (3) befindlichen Masse und des Laserstrahls herbeizuführen, und anschließend jeweils die Laserlichtquelle (4) automatisch aktivieren, um das dem jeweils markierten Punkt entsprechende Objekt von dem Träger (3) zu der Auffangvorrichtung (2) zu katapultieren.

20. Steuersystem nach Anspruch 19,
**dadurch gekennzeichnet,**
**dass** die Steuermittel Speichermittel zum Speichern der mit Hilfe der Markierungsfunktion (41) auf dem Videobild markierten Punkte umfassen, und
**dass** die Steuermittel derart ausgestaltet sind, dass sie durch Zugriff auf die Speichermittel die Verstellsignale für die Verstellmittel derart erzeugen, dass die auf dem Videobild markierten und in den Speichermitteln gespeicherten Punkte nacheinander von den Verstellmitteln angefahren werden, wobei die Steuermittel die Laserlichtquelle (4) jeweils nach Anfahren eines markierten und in den Speichermitteln gespeicherten Punktes zum Katapultieren eines dem jeweiligen markierten Punkt entsprechenden Objekts zur Erzeugung eines Laserschusses aktivieren.

21. Steuersystem nach einem der Ansprüche 15-20,
**dadurch gekennzeichnet,**
**dass** eine Verstellvorrichtung zum Verstellen der Auffangvorrichtung (2) vorgesehen ist, wobei die Steuermittel eine Verstellfunktion (51, 52) zum automatischen Erzeugen von Verstellsignalen für diese Verstellvorrichtung umfassen, um eine entsprechende Verstellung der Auffangvorrichtung (2) herbeizuführen, und
**dass** die Verstellmittel eine Verstellvorrichtung zum Verstellen des Trägers (3) umfassen, wobei die Steuermittel eine Verstellfunktion (24-28, 32, 36) zur automatischen Erzeugung von Verstellsignalen für diese Verstellvorrichtung umfassen, um den Träger (3) entsprechend zu verstellen.

22. Steuersystem nach einem der Ansprüche 15-21,
**dadurch gekennzeichnet,**
**dass** die Steuermittel Speichermittel für vordefinierte Positionen der Auffangvorrichtung (2) und/oder des Trägers (3) umfassen,
**dass** die Steuermittel derart ausgestaltet sind, dass sie bei Auswahl einer gespeicherten Position entsprechende Verstellsignale für die jeweilige Verstellvorrichtung erzeugen, um die Auffangvorrichtung (2) bzw. den Träger (3) automatisch in die jeweilige Position zu bewegen, und
**dass** die Steuermittel eine Korrekturfunktion (33) zum Korrigieren von den in den Speichermitteln gespeicherten Positionen des Trägers (3) entsprechenden Koordinaten bei einer Verschiebung des Zentrums der Darstellung eines Videobilds der auf dem Träger (3) befindlichen Masse auf einer Anzeigeneinheit (8) umfassen.

23. Steuersystem nach Anspruch 22,
**dadurch gekennzeichnet,**
**dass** die Korrekturfunktion der Steuermittel derart ausgestaltet ist, dass sie automatisch eine Verschiebung des Zentrums der Darstellung des Videobilds auf der Anzeigeneinheit (8) erfasst und automatisch die Koordinaten der in den Speichermitteln gespeicherten Positionen des Trägers (3) entsprechend korrigiert.

24. Steuersystem nach einem der Ansprüche 15-23,
**dadurch gekennzeichnet,**
**dass** die Vorrichtung ein Objektiv (18) aufweist, über welches die Masse mit dem Laserstrahl bestrahlt wird, und dass das Steuersystem (7) Speichermittel zum Speichern von verschiedenen Einstellwerten für die Bestrahlungsenergie und/oder für die Fokussierung des Laserstrahl für unterschiedliche Objektive umfasst,
wobei die Steuermittel des Steuersystems (7) bei Verwendung eines bestimmten Objektivs (18) die Laserlichtquelle (4) zur automatischen Einstellung der Bestrahlungsenergie und/oder der Fokussierung des davon erzeugten Laserstrahls gemäß den jeweils für dieses Objektiv (18) gespeicherten Einstellwerten ansteuert.

25. Steuersystem nach einem der Ansprüche 15-24,
**dadurch gekennzeichnet,**
**dass** Bildaufnahmemittel (1) mit einem Objektiv (18) zur Aufnahme eines Videobilds der auf dem Träger (3) befindlichen Masse vorgesehen sind,
**dass** die Steuermittel Speichermittel zum Speichern von Laserfokus- und/oder Laserenergieeinstellungen für den Laserstrahl der Laserlichtquelle (4) für unterschiedliche Objektive (18) umfassen, und
**dass** die Steuermittel derart ausgestaltet sind, dass sie in Abhängigkeit von dem jeweils verwendeten Objektiv (18) aus den Speichermitteln die diesem Objektiv entsprechenden Laserfokus- und/oder Laserenergieeinstellungen auslesen und zur Ansteuerung der Laserlichtquelle (4) verwenden.

26. Steuersystem nach Anspruch 20 und einem der Ansprüche 15-25,
**dadurch gekennzeichnet,**
**dass** die Kalibrierungsfunktion (38) der Steuermittel derart ausgestaltet ist, dass sie der Kalibrierung der Verstellmittel entsprechende Kalibrierungsinformationen ermittelt,
**dass** zur Aufnahme des Videobilds vorgesehene Bildaufnahmemittel (1) ein Objektiv (18) zur Aufnahme des Videobilds umfassen, und
**dass** die Steuermittel Speichermittel zum Speichern der bei einer Verwendung von unterschiedlichen Objektiven (18) durch die Kalibrierungsfunktion (38) erzeugten Kalibrierungsinformationen umfassen, wobei die Steuermittel derart ausgestaltet sind, dass sie bei Verwendung eines bestimmten Objektivs die diesem Objektiv entsprechenden Kalibrierungsinformationen aus den Speichermitteln auslesen und zur Kalibrierung der Verstellmittel verwenden.

27. Steuersystem nach einem der Ansprüche 15-26,
**dadurch gekennzeichnet,**
**dass** die Steuermittel eine Zeichenfunktion (42, 43, 69) zum Zeichnen einer einem bestimmten Bereich der Masse definierenden Kurve aufweisen, wobei die Steuermittel ein von der auf dem Träger (3) befindlichen Masse aufgenommenes Videobild auf einer Anzeigeneinheit (8) mit der gezeichneten Kurve überlagert darstellen, und
**dass** die Steuermittel derart ausgestaltet sind, dass sie die Verstellmittel entsprechend der gezeichneten Schnittkurve zum rasterartigen Abfahren des bestimmten Bereichs der Masse ansteuern und dabei die Laserlichtquelle (4) derart wiederholt aktivieren, dass die in dem bestimmten Bereich der Masse enthaltenen Objekte von dem Träger (3) zu der Auffangvorrichtung (2) katapultiert und somit der bestimmte Bereich der Masse abgetragen wird.

## Claims

1. A method for working a mass, said mass being located on an object carrier held by a carrier (3) and said mass being cut by irradiation with a laser beam and/or said mass or an object in said mass being catapulted from the carrier (3) to a collector device (2), wherein the cutting and/or catapulting of the mass or of the object in the mass by means of the irradiation by the laser beam is effected in a computer-aided manner,
**characterised in that**
positions of the carrier (3) are stored in a computer-aided manner in relation to a predetermined reference point of the object carrier in order, on later use of the same object carrier, to move to a certain position of the object carrier by selecting a stored position and generating corresponding adjustment signals for the carrier adjustment device.

2. The method according to Claim 1,
**characterised in that**
a video image of the mass located on the carrier (3) is continuously recorded and displayed, and **in that** the cutting and/or catapulting is controlled in a computer-aided manner with reference to the video image displayed.

3. The method according to Claim 2,
**characterised in that**
the displayed video image is overlaid in a computer-aided manner with a cutting curve (62) and adjustment signals corresponding to the cutting curve (62) are then automatically generated for a corresponding relative movement between the carrier (3) and the laser beam in order to produce in the mass a cut (63) corresponding to the cutting curve (62) while simultaneously activating the laser beam.

4. The method according to Claim 2 or 3,
**characterised in that**
at least one point (66) corresponding to an object (64) to be catapulted is defined in a computer-aided manner on the video image displayed and an adjustment signal is then automatically generated for corresponding alignment of the carrier (3) and of the laser beam in order to catapult the desired object (64) from the carrier (3) to the collector device (2) on subsequent activation of the laser beam.

5. The method according to Claim 4,
**characterised in that**
a carrier adjustment device for adjusting the carrier (3) is provided, and **in that** the carrier adjustment device is calibrated with reference to a video image of the mass on the carrier (3) displayed.

6. The method according to Claim 5,
**characterised in that**
for calibration a point is defined a plurality of times on the video image and is made to coincide with a predetermined point in the mass located on the carrier (3) by means of computer-aided adjustment of the carrier adjustment device.

7. The method according to any one of the preceding claims,
**characterised in that**
a collector device adjustment device for adjusting the collector device (2) is provided, wherein adjustment signals for the collector device adjustment device are generated in a computer-aided manner in order to adjust the collector device (2) automatically, and **in that** a carrier adjustment device for adjusting the carrier (3) is provided, wherein adjustment signals for the carrier adjustment device are generated in a computer-aided manner in order to adjust the carrier (3) automatically.

8. The method according to any one of the preceding claims,
**characterised in that**
a video image of the mass on the carrier (3) is recorded and displayed, and **in that** a displacement of the centre of the video image displayed is captured and stored positions of the carrier (3) are then correspondingly corrected.

9. The method according to Claim 8,
**characterised in that**
the video image is recorded by means of an objective (18),
**in that** before a change of the objective (18) the carrier (3) is so moved that the laser beam adopts a predetermined position in the video image in relation to the mass located on the carrier (3),
**in that** after a change of the objective (18) the carrier (3) is so moved that the laser beam again adopts on the video image the same predetermined position in relation to the mass located on the carrier (3), the adjustment travel of the carrier (3) required therefor being automatically captured, and
**in that** the stored positions of the carrier (3) are automatically corrected in accordance with the previously captured adjustment travel.

10. The method according to any one of the preceding claims,
**characterised in that**
a video image of the mass on the carrier (3) is recorded and displayed,
**in that** the video image is recorded by means of an objective (18), **in that** for different objectives (18) suitable settings for the energy and focusing of the laser beam for cutting and/or catapulting are determined and stored, and
**in that** when the objective (18) is changed the corresponding stored values for the energy and and/or focusing of the laser beam are read out and used to control the laser beam.

11. The method according to Claim 10,
**characterised in that**
when the objective (18) is changed the stored values for the energy and/or the focusing of the laser beam corresponding to the new objective (18) are automatically read out and the laser beam is automatically controlled accordingly.

12. The method according to Claim 5 and any one of the preceding claims,
**characterised in that**
the video image is recorded by means of an objective (18), and **in that** for different objectives calibration of the carrier adjustment device is carried out, corresponding calibration information being acquired and stored following each calibration in order, on later use of the same objective, to read out again the corresponding stored calibration information and to use said calibration information for corresponding calibration of the carrier adjustment device.

13. The method according to any one of the preceding claims,
**characterised in that**
a cutting and/or catapulting process is carried out in a computer-aided manner, and **in that** it is determined through evaluation of a cutting or catapulting line displayed on the video image following a cutting and/or catapulting process of a mass on the carrier (3) whether a clean cutting and/or catapulting process has been carried out, the cutting and/or catapulting process being repeated if a clean cutting and/or catapulting process has not been carried out.

14. The method according to any one of the preceding claims,
**characterised in that**
a video image of the mass on the carrier (3) is recorded and displayed, and
**in that** the video image displayed is overlaid in a computer-aided manner with a curve (62) defining a certain zone of the mass and adjustment signals corresponding to the curve (62) are then automatically generated for a corresponding relative movement between the carrier (3) and the laser beam in order to traverse in a grid pattern the certain zone of the mass with corresponding automatic repeated activation of the laser beam and thereby to catapult the objects (64) contained in the certain zone of the mass from the carrier (3) to the collector device (2) and thereby to remove the certain zone.

15. A control system for a device for working a mass,
said device having a carrier (3) for holding an object carrier on which a mass is located, said device having a laser light source (4) for generating a laser beam in order to cut the mass and/or to catapult the mass and/or an object in the mass from the carrier (3) to a collector device (2) by means of irradiation with the laser beam, and the control system (7) comprising control means for automatically controlling the laser light source (4) and for automatically controlling adjustment means for producing a relative movement between the laser beam and the carrier (3),
**characterised in that**
the control means comprise storage means for storing predefined positions of the carrier (3) in relation to a predetermined reference point of the object carrier, wherein the control means are configured such that they generate, upon selection of a stored position, corresponding adjustment signals for an adjustment device for adjusting the carrier (3) in order to move the carrier (3) to a corresponding position in relation to the reference point.

16. The control system according to Claim 15,
**characterised in that**
the control system has inputting means (9, 10) for controlling the adjustment means of the device, the control means being so configured that they convert an input of a user captured by means of the input means (9, 10) into a corresponding adjustment signal for the adjustment means.

17. The control system according to Claim 15 or 16,
**characterised in that**
a display unit (8) for displaying a video image of the mass located on the carrier (3) recorded by image recording means (1) is provided,
**in that** the control means have a drawing function (42, 43, 69) for drawing a cutting curve, the control means displaying the video image on the display unit (8) with the drawn cutting curve overlaid thereon, and **in that** the control means are so configured that they control the adjustment means according to the cutting curve drawn and at the same time activate the laser light source (4) in order to make a cut corresponding to the cutting curve in the mass located on the carrier (3) by means of the relative movement between the carrier (3) and the laser beam then brought about by the control means.

18. The control system according to any ones of Claims 15-17,
**characterised in that**
the control means include a calibration function (38) for calibrating the adjustment means with reference to a video image of the mass on the carrier (3) displayed on a display unit (8).

19. The control system according to any one of Claim 15-18,
**characterised in that**
the control means include a marking function (41) for computer-aided marking of at least one point on a video image of the mass on the carrier (3) displayed on a display unit (8) corresponding to an object to be catapulted, and **in that** the control means are so configured that they convert points marked on the video image by means of the marking function (41) into corresponding adjustment signals for the adjustment means in order to bring about in each case a corresponding alignment of the mass located on the carrier (3) and the laser beam, and then in each case automatically activate the laser light source (4) in order to catapult the object corresponding to the point marked from the carrier (3) to the collector device (2).

20. The control system according to Claim 19,
**characterised in that**
the control means include storage means for storing points marked on the video image by means of the marking function (41), and **in that** the control means are so configured that by accessing the storage means they so generate adjustment signals for the adjustment means that the points marked on the video image and stored in the storage means are successively moved into position by the adjustment means, the control means in each case activating the laser light source (4), after moving to a point marked and stored in the storage means, so as to generate a laser shot for catapulting an object corresponding to the respective marked point.

21. The control system according to Claim 23,
**characterised in that**
an adjustment device for adjusting the collector device (2) is provided, wherein the control means include an adjustment function (51, 52) for automatically generating adjustment signals for this adjustment device in order to bring about a corresponding adjustment of the collector device (2), and **in that** the adjustment means include an adjustment device for adjusting the carrier (3), wherein the control means include an adjustment function (24-28, 32, 36) for automatically generating adjustment signals for this adjustment device in order to adjust the carrier (3) accordingly.

22. The control system according to any one of Claims 15-21,
**characterised in that**
the control means include storage means for predefined positions of the collector device (2) and/or of the carrier (3),
**in that** the control means are so configured that, on selection of a stored position, they generate corresponding adjustment signals for the relevant adjustment device in order to move the collector device (2) or the carrier (3) automatically to the corresponding position in each case, and
**in that** the control means include a correction function (33) for correcting coordinates stored in the storage means and corresponding to positions of the carrier (3) in case of a displacement of the centre of a video image of the mass on the carrier (3) displayed on a display unit (8).

23. The control system according to Claim 22,
**characterised in that**
the correction function of the control means is so configured that it automatically captures a displacement of the centre of the video image displayed on the display unit (8) and automatically corrects the coordinates of the positions of the carrier (3) stored in the storage means accordingly.

24. The control system according to any one of Claims 15-23,
**characterised in that**
the device has an objective (18) by means of which the mass is irradiated with the laser beam, and **in that** the control system (7) includes storage means for storing different adjustment values for the radiation energy and/or for the focusing of the laser beam for different objectives, wherein the control means of the control system (7), on the use of a certain objective (18), control the laser light source (4) for automatic adjustment of the radiation energy and/or of the focusing of the laser beam generated thereby according to the stored adjustment values for this objective (18).

25. The control system according to any one of Claim 15-24,
**characterised in that**
image recording means (1) including an objective (18) for recording a video image of the mass on the carrier are provided,
**in that** the control means include storage means for storing laser focus and/or a laser energy settings for the laser beam of the laser light source (4) for different objectives (18), and
**in that** the control means are so configured that, depending on the objective (18) used in each case, they read out the laser focus and/or laser energy settings corresponding to this objective from the storage means and use said settings to control the laser light source (4).

26. The control system according to Claim 20 and any one of Claims 15-25,
**characterised in that**
the calibration function (38) of the control means is so configured that it acquires calibration information corresponding to the calibration of the adjustment means, **in that** image recording means (1) for recording the video image include an objective (18) for recording the video image, and **in that** the control means include storage means for storing the calibration information generated by means of the calibration function (38) in case of use of different objectives (18), wherein the control means are so configured that, on use of a certain objective, they automatically read out the calibration information corresponding to this objective and use said information for calibrating the adjustment means.

27. The control system according to any one of claims 15-26,
**characterised in that**
the control means have a drawing function (42, 43, 69) for drawing a curve defining a certain zone of the mass, the control means overlaying a video image recorded of the mass on the carrier (3) on a display unit (8) with the curve drawn, and **in that** the control means are so configured that they control the adjustment means according to the drawn cutting curve to induce a grid-like traversing of the certain zone of the mass while repeatedly so activating the laser light source (4) that it catapults the objects contained in the certain zone of the mass from the carrier (3) to the collector device (2) and the certain zone of the mass is thereby removed.

## Revendications

1. Procédé d'usinage d'une masse,
la masse se trouvant sur un porte-objet maintenu par un support (3), et
par irradiation avec un rayon laser, la masse étant coupée et/ou la masse ou un objet de la masse étant catapulté(e) du support (3) vers un dispositif collecteur (2),
la coupe et/ou le catapultage de la masse ou de l'objet de la masse étant effectuée(s) par irradiation assistée par ordinateur au rayon laser,
**caractérisé en ce que**
des positions du support (3) sont mémorisées de façon assistée par ordinateur par rapport à un point de référence déterminé du porte-objet, pour aborder, lors d'une utilisation ultérieure du même porte-objet, par choix d'une position mémorisée et par génération de signaux d'ajustage correspondants pour un dispositif d'ajustage du support un point déterminé du porte-objet.

2. Procédé selon la revendication 1,
**caractérisé en ce que**,
une image vidéo de la masse se trouvant sur le support (3) est enregistrée en continu et représentée et **en ce que**, à l'aide de l'image vidéo représentée, la coupe et/ou le catapultage sont commandés de façon assistée par ordinateur.

3. Procédé selon la revendication 2,
**caractérisé en ce que**,
à l'image vidéo représentée est superposée une courbe de coupe (62) et **en ce que** par la suite, des signaux d'ajustage correspondant à la courbe de coupe (62) sont générés pour un déplacement relatif correspondant entre le support (3) et le rayon laser, pour obtenir, lors d'une activation simultanée du rayon laser une coupe (63) de la masse correspondant à la courbe de coupe (62).

4. Procédé selon la revendication 2 ou 3,
**caractérisé en ce que**
sur l'image vidéo représentée, un point (66) correspondant à un objet (64) à catapulter est défini de façon assistée par ordinateur et **en ce que** par la suite, un signal d'ajustage est automatiquement généré pour l'orientation correspondante du support (3) et du rayon laser, pour catapulter, lors d'une activation consécutive du rayon laser l'objet (64) souhaité du support (3) vers le dispositif collecteur (2).

5. Procédé selon l'une quelconque des revendications précédentes, **caractérisé en ce que**,
un dispositif d'ajustage du support est prévu pour l'ajustage du support (3), et
en ce le dispositif d'ajustage du support est calibré par rapport à une image vidéo de la masse se trouvant sur le support (3)

6. Procédé selon la revendication 5,
**caractérisé en ce que**,
pour le calibrage, un point qui par ajustage assisté par ordinateur du dispositif d'ajustage du support est amené en coïncidence avec un point déterminé de la masse se trouvant sur le support (3) est prédéfini plusieurs fois sur l'image vidéo.

7. Procédé selon l'une quelconque des revendications précédentes,
**caractérisé en ce que**,
il est prévu un dispositif d'ajustage du dispositif collecteur, pour l'ajustage du dispositif collecteur (2), des signaux d'ajustage étant générés de façon assistée par ordinateur pour le dispositif d'ajustage du dispositif collecteur, pour ajuster automatiquement le dispositif collecteur (2), et
il est prévu un dispositif d'ajustage du support, pour l'ajustage du support (3), des signaux d'ajustage étant générés de façon assistée par ordinateur pour le dispositif d'ajustage du support, pour ajuster automatiquement le support (3).

8. Procédé selon l'une quelconque des revendications précédentes,
**caractérisé en ce que**,
une image vidéo de la masse se trouvant sur le support (3) est enregistrée et représentée, et
un déplacement du centre de la représentation de l'image vidéo est détecté et **en ce que** par la suite, des positions mémorisées du support (3) sont corrigées en conséquence.

9. Procédé selon la revendication 8,
**caractérisé en ce que**
l'image vidéo est enregistrée par l'intermédiaire d'un objectif (18),
avant un changement de l'objectif (18), le support (3) est déplacé de sorte que le rayon laser adopte sur l'image vidéo une position déterminée par rapport à la masse se trouvant sur le support (3),
après le changement de l'objectif (18), le support (3) est déplacé de sorte que le rayon laser adopte de nouveau sur l'image vidéo la même position déterminée par rapport à la masse se trouvant sur le support (3), le trajet d'ajustage du support (3) nécessaire à cet effet étant détecté automatiquement, et
**en ce que** les positions mémorisées du support (3) sont automatiquement corrigées en fonction du trajet d'ajustage précédemment détecté.

10. Procédé selon l'une quelconque des revendications précédentes,
**caractérisé en ce que**,
une image vidéo de la masse se trouvant sur le support (3) est enregistrée et représentée, et
**en ce que** l'image vidéo est enregistrée par l'intermédiaire d'un objectif (18),
**en ce que** pour différents objectifs (18) des réglages de l'énergie et de la focalisation du rayon laser adaptés pour la coupe et/ou pour le catapultage sont déterminés et mémorisés, et
lors d'un changement de objectif (18), les valeurs mémorisées correspondantes pour l'énergie et/ou la focalisation du rayon laser sont lues et utilisées pour la commande du rayon laser.

11. Procédé selon la revendication 10,
**caractérisé en ce que**,
lors d'un changement de l'objectif (18), les valeurs mémorisées pour l'énergie et/ou la focalisation du rayon laser, correspondant au nouvel objectif (18) sont lues automatiquement et le rayon laser est excité automatiquement en conséquence.

12. Procédé selon la revendication 5 et l'une des revendications précédentes,
**caractérisé en ce que**,
l'image vidéo est enregistrée par l'intermédiaire d'un objectif (18), et
le calibrage du dispositif d'ajustage du support est effectué pour différents objectifs, à la suite de chaque calibrage, des informations de calibrage correspondantes étant recueillies et mémorisées, pour relire de nouveau les informations de calibrage mémorisées correspondantes lors d'une utilisation ultérieure du même objectif et les utiliser pour le calibrage automatique correspondant du dispositif d'ajustage du support.

13. Procédé selon l'une quelconque des revendications précédentes,
**caractérisé en ce que**,
on procède à un processus de coupe et/ou de catapultage assisté par ordinateur, et
**en ce que** par évaluation d'une ligne de coupe ou de catapultage représentée par une image vidéo enregistrée de la masse se situant sur le support (3), suite au processus de coupe et/ou de catapultage, il est constaté si un processus de coupe nette et/ou de catapultage net a été réalisé, dans le cas où aucun processus de coupe nette et/ou de catapultage net n'a été réalisé, le processus de coupe et/ou de catapultage étant répété.

14. Procédé selon l'une quelconque des revendications précédentes,
**caractérisé en ce que**,
une image vidéo de la masse se trouvant sur le support (3) est enregistrée et représentée, et
**en ce que**, de façon assistée par ordinateur, il est superposé à l'image vidéo représentée une courbe (62) définissant une zone déterminée de la masse et par la suite, des signaux d'ajustage correspondant à la courbe (62), pour un déplacement relatif entre le support (3) et le rayon laser sont automatiquement générés, pour suivre à la façon d'une trame la zone déterminée de la masse lors d'une activation automatique répétée correspondante du rayon laser et pour catapulter ainsi les objets (64) contenus dans la zone déterminée de la masse du support (3) vers le dispositif collecteur (2) et pour procéder à un enlèvement de la zone déterminée.

15. Système de commande d'un dispositif d'usinage d'une masse,
le dispositif comportant un support (3) pour maintenir un porte-objet, sur lequel se trouve une masse, le dispositif comportant une source de lumière à laser (4) pour la génération d'un rayon laser, pour couper la masse par irradiation avec le rayon laser et/ou pour catapulter la masse ou un objet de la masse du support (3) vers un dispositif collecteur (2),
le système de commande (7) comportant des moyens de commande pour l'excitation automatique de la source de lumière à laser (4) et pour l'excitation automatique de moyens d'ajustage pour provoquer un déplacement relatif entre le rayon laser et le support (3),
**caractérisé en ce que**,
les moyens de commande comprennent des moyens de mémorisation pour mémoriser des positions prédéfinies du support (3) par rapport à un point de référence déterminé du porte-objet, les moyens de commande étant conçus de sorte que lors du choix d'une position mémorisée, ils génèrent des signaux d'ajustage correspondants pour un dispositif d'ajustage pour l'ajustage du support (3), pour déplacer automatiquement le support (3) dans la position correspondante, par rapport au point de référence.

16. Système de commande selon la revendication 15,
**caractérisé en ce que**,
le système de commande comporte des moyens de saisie (9, 10) pour commander les moyens d'ajustage du dispositif, les moyens de commande étant conçus de sorte à transformer un déplacement détecté par l'intermédiaire des moyens de saisie (9, 10) d'un utilisateur en un signal d'ajustage correspondant pour les moyens d'ajustage.

17. Système de commande selon la revendication 15 ou 16,
**caractérisé en ce que**,
il est prévu une unité d'affichage (8) pour la représentation d'une image vidéo enregistrée par un moyen d'enregistrement d'image (1) de la masse se trouvant sur le support (3), **en ce que** les moyens de commande comportent une fonction de dessin (42, 43, 69), pour dessiner une courbe de coupe, les moyens de commande représentant sur l'unité d'affichage (8) l'image vidéo de façon superposée avec la courbe de coupe dessinée, et
les moyens de commande sont conçus de sorte à exciter les moyens d'ajustage en fonction de la courbe de coupe dessinée et à activer simultanément la source de lumière à laser (4) pour obtenir, par le déplacement relatif ensuite provoqué par les moyens d'ajustage, entre le support (3) et le rayon laser, une coupe correspondant à la courbe de coupe de la masse se trouvant sur le support (3).

18. Système de commande selon l'une quelconque des revendications 15 à 17,
**caractérisé en ce que**,
les moyens de commande comprennent une fonction de calibrage (38) pour le calibrage des moyens d'ajustage par rapport à une image vidéo représentée sur une unité d'affichage (8) de la masse se trouvant sur le support (3).

19. Système de commande selon l'une quelconque des revendications 15 à 18,
**caractérisé en ce que**,
les moyens de commande comprennent une fonction de marquage (41), pour le marquage assisté par ordinateur d'au moins un point correspondant à un objet à catapulter, sur une image vidéo représentée sur une unité d'affichage (8) de la masse se trouvant sur le support (3), et
les moyens de commande sont conçus de sorte à transformer les points marqués sur l'image vidéo à l'aide de la fonction marquage (41) en des signaux d'ajustage correspondants pour les moyens d'ajustage, pour provoquer chaque fois une orientation correspondante de la masse se trouvant sur le support (3) et du rayon laser, et par la suite, activent automatiquement, respectivement la source de lumière à laser (4), pour catapulter l'objet correspondant au point respectivement marqué du support (3) vers le dispositif collecteur (2).

20. Système de commande selon la revendication 19,
**caractérisé en ce que**,
les moyens de commande comprennent des moyens de mémorisation pour mémoriser les points marqués sur l'image vidéo à l'aide de la fonction de marquage (41), et
les moyens de commande sont conçus de sorte à ce que, par accès au moyens de mémorisation, il génèrent les signaux d'ajustage pour les moyens d'ajustage, de sorte que les points marqués sur l'image vidéo et mémorisés dans les moyens de mémorisation soient abordés successivement par les moyens d'ajustage, les moyens de commande activant la source de lumière à laser (4) chaque fois après avoir abordé un point marqué et mémorisé dans les moyens de mémorisation, pour le catapultage d'un objet correspondant au point respectivement marqué, pour la génération d'un tir de laser.

21. Système de commande selon l'une quelconque des revendications 15 à 20,
**caractérisé en ce que**,
un dispositif d'ajustage est prévu pour ajuster le dispositif collecteur (2), les moyens de commande comprenant une fonction d'ajustage (51, 52), pour la génération automatique de signaux d'ajustage pour ledit dispositif d'ajustage, pour provoquer un ajustage correspondant du dispositif collecteur (2), et
les moyens d'ajustage comprennent un dispositif d'ajustage pour l'ajustage du support (3), les moyens de commande comprenant une fonction d'ajustage (24 à 28, 32, 36), pour la génération automatique de signaux d'ajustage pour ledit dispositif d'ajustage, pour ajuster le support (3) en conséquence.

22. Système de commande selon l'une quelconque des revendications 15 à 21,
**caractérisé en ce que**,
les moyens de commande comprennent des moyens de mémorisation pour des positions prédéfinies du dispositif collecteur (2) et/ou du support (3),
les moyens de commande sont conçus de sorte à générer, lors du choix d'une position mémorisée des signaux d'ajustage correspondants pour le dispositif d'ajustage concerné, pour déplacer automatiquement le dispositif collecteur (2) ou le support (3) dans la position concernée, et
les moyens de commande comprennent une fonction de correction (33) pour corriger des coordonnées correspondant aux positions du support (3) mémorisées dans les moyens de mémorisation, lors d'un déplacement du centre de la représentation d'une image vidéo de la masse se trouvant sur le support (3) sur une unité d'affichage (8).

23. Système de commande selon la revendication 22,
**caractérisé en ce que**,
la fonction de correction des moyens de commande est conçue de sorte à détecter automatiquement un déplacement du centre de la représentation de l'image vidéo sur l'unité d'affichage (8) et à corriger automatiquement en conséquence les coordonnées des positions du support (3) qui sont mémorisées dans les moyens de mémorisation.

24. Système de commande selon l'une quelconque des revendications 15 à 23,
**caractérisé en ce que**,
le dispositif comporte un objectif (18), par l'intermédiaire duquel la masse est irradiée par le rayon laser, et
le système de commande (7) comprend des moyens de mémorisation pour mémoriser différentes valeurs d'ajustage pour l'énergie d'irradiation et/ou pour la focalisation du rayon laser pour différents objectifs,
lors de l'utilisation d'un certain objectif (18), les moyens de commande du système de commande (7) excitant la source de lumière à laser (4) pour le réglage automatique de l'énergie d'irradiation et/ou pour la focalisation du rayon laser généré par cette dernière, selon les valeurs de réglage mémorisées pour ledit objectif (18).

25. Système de commande selon l'une quelconque des revendications 15 à 24,
**caractérisé en ce que**,
des moyens d'enregistrement d'image (1) avec un objectif (18) sont prévus pour enregistrer une image vidéo de la masse se trouvant sur le support (3),
les moyens de commande comprennent des moyens de mémorisation, pour mémoriser des réglages du foyer du laser et/ou de l'énergie du laser pour le rayon laser de la source de lumière à laser (4) pour différents objectifs (18), et
les moyens de commande sont conçus de sorte à lire en fonction de l'objectif (18) respectivement utilisé, dans les moyens de mémorisation correspondant audit objectif des réglages du foyer du laser et/ou de l'énergie du laser et à les utiliser pour l'excitation de la source de lumière à laser (4).

26. Système de commande selon la revendication 20 et l'une des revendications 15 à 25,
**caractérisé en ce que**,
la fonction de calibrage (38) des moyens de commande est conçue de sorte à déterminer des informations de calibrage correspondant au calibrage des moyens d'ajustage,
des moyens d'enregistrement d'image (1) prévus pour l'enregistrement de l'image vidéo comprennent un objectif (18) pour l'enregistrement de l'image vidéo, et
les moyens de commande comprennent des moyens de mémorisation pour mémoriser les informations de calibrage générées par la fonction de calibrage (38), lors d'une utilisation de différents objectifs (18), les moyens de commande étant conçus de sorte à lire, lors de l'utilisation d'un objectif déterminé les informations de calibrage correspondant audit objectif dans les moyens de mémorisation et à les utiliser pour le calibrage des moyens d'ajustage.

27. Système de commande selon l'une quelconque des revendications 15 à 26,
**caractérisé en ce que**,
les moyens de commande comprennent une fonction de dessin (42, 43, 69), pour dessiner une courbe définissant une zone déterminée de la masse, les moyens de commande représentant de façon superposée à la courbe dessinée une image vidéo enregistrée par la masse se trouvant sur le support (3) sur une unité d'affichage (8), et
les moyens de commande sont conçus de sorte à exciter les moyens d'ajustage en fonction de la courbe de coupe dessinée, pour la poursuite en forme de trame de la zone déterminée de la masse et pour activer de façon répétée à cet effet la source de lumière à laser (4), **en ce que** des objets contenus dans la zone déterminée de la masse sont catapultés du support (3) vers le dispositif collecteur (2) et de ce fait, la zone déterminée de la masse est enlevée.
